# EUROPÄISCHE PATENTSCHRIFT

(11) **EP 2 754 353 B1**
(45) Veröffentlichungstag und Bekanntmachung des Hinweises auf die Patenterteilung: **30.10.2019**
(21) Anmeldenummer: 13005941.3
(22) Anmeldetag: 19.12.2013
(51) Int. Cl.: A23F 5/40

(54) **Instant-Getränkezusammensetzung sowie Verfahren zu deren Herstellung und deren Verwendung**
Instant drink mixture and a method for producing and using the same
Composition de boisson instantanée, son procédé de fabrication et son utilisation

(30) Priorität: 10.01.2013 DE 102013000227; 07.02.2013 DE 102013002037
(43) Veröffentlichungstag der Anmeldung: 16.07.2014
(73) Patentinhaber: Krüger GmbH & Co. KG, 51469 Bergisch-Gladbach (DE)
(72) Erfinder: Krüger, Willibert, 51467 Bergisch Gladbach (DE)
(74) Vertreter: Strehlke, Ingo Kurt

(56) Entgegenhaltungen:
- EP-A2- 0 220 889
- WO-A1-2012/009668
- AT-B- 286 760

## Beschreibung

Die vorliegende Erfindung betrifft das Gebiet der Lebensmitteltechnologie, insbesondere der Instant-Produkte bzw. Instant-Getränke.

Insbesondere betrifft die vorliegende Erfindung ein Verfahren zur Herstellung einer Instant-Getränkezusammensetzung, vorzugsweise für ein kaffeehaltiges Instant-Getränk bzw. ein Kaffee-Getränk.

Darüber hinaus betrifft die vorliegende Erfindung eine Instant-Getränkezusammensetzung, welche zur Herstellung eines kaffeehaltigen Instant-Getränks oder zur Herstellung eines Kaffee-Getränks geeignet ist und durch das erfindungsgemäße Verfahren erhältlich ist.

Schließlich betrifft die vorliegende Erfindung die erfindungsgemäßen Verwendungen der Instant-Getränkezusammensetzungen nach der vorliegenden Erfindung.

Der Begriff der Instant-Produkte stellt eine Bezeichnung für meist teilchen- bzw. pulverförmige, in Wasser lösliche bzw. dispergierbare Produkte, überwiegend auf dem Gebiet der Nahrungs- und Geschmacksmittel, wie Kaffee-, Tee-, Kakao-, Milchprodukte etc., dar. Die Herstellung von Instant-Produkten erfolgt im Allgemeinen durch Extraktion der Nahrungs- und Geschmacksmittel bzw. deren Inhaltsstoffen, gefolgt von einer anschließenden Trocknung, insbesondere Gefrier- oder Sprühtrocknung. Für weitergehende Einzelheiten kann insbesondere verwiesen werden auf Römpp Chemielexikon, Band 3, 10. Auflage, Georg-Thieme-Verlag, Stuttgart/New York, 1997, Seite 1936, Stichwort: "Instant-Produkte", sowie die dort referierte Literatur, deren jeweiliger Inhalt hiermit durch Bezugnahme eingeschlossen ist.

Auf diese Weise werden auch Instantkaffee, synonym auch als Löskaffee bezeichnet, bzw. kaffeehaltige Instant-Getränkezusammensetzungen hergestellt. Diesbezüglich kann ebenfalls auf Römpp Chemielexikon, Band 3, Georg-Thieme-Verlag, Stuttgart/New York 1997, Seiten 2042 bis 2044, Stichwort: "Kaffee", sowie die dort referierte Literatur verwiesen werden, deren gesamter Offenbarungsgehalt hiermit durch Bezugnahme eingeschlossen ist.

Nachteilig an Instantkaffees bzw. Löskaffees als solchen, aber auch an kaffeehaltigen Instant-Getränkezusammensetzungen, wie beispielsweise Instant-Cappuccino, sind die oftmals nicht zufriedenstellenden organoleptischen bzw. geschmacklichen Eigenschaften. Insbesondere fehlt es Instantkaffees bzw. kaffeehaltigen Instant-Getränkezusammensetzungen an dem typischen vollmundigen Röstaroma von frisch aufgebrühtem Kaffee.

Aufgrund der nicht immer optimalen Geschmacks- und Aromaeigenschaften von Instantkaffee bzw. kaffeehaltigen Instant-Getränkezusammensetzungen wird im Stand der Technik unter anderem versucht, die geschmacklichen Defizite, insbesondere das fehlende Röstaroma, durch den Zusatz künstlicher Geschmacks- und Aromastoffe zu kompensieren. Dies ist jedoch nicht nur verfahrensaufwendig, sondern in vielen Fällen auch unerwünscht, da ein verfälschter oder "künstlicher" Geschmack entsteht. Teilweise verbieten auch die lebensmittelrechtlichen Vorschriften den Zusatz von künstlichen Aroma- und Geschmacksstoffen.

Weiterhin sind im Stand der Technik Versuche unternommen worden, Instantkaffees bzw. kaffeehaltigen Instant-Getränkezusammensetzungen eine vollmundige Röstkaffeenote zu verleihen, indem im Rahmen des Herstellungsverfahrens den Zusammensetzungen echtes Röstkaffeepulver zugesetzt wird. Die diesbezüglich erhaltenen Zusammensetzungen bzw. deren Herstellungsverfahren weisen jedoch ebenfalls erhebliche Nachteile auf bzw. haben bislang nicht zu dem gewünschten Erfolg geführt.

Beispielsweise beschreibt die EP 2 436 269 A1 ein Herstellungsverfahren für eine granulatförmige lösliche Kaffeekomposition, welche darin inkorporiertes Röstkaffeepulver enthält. Bei dem beschriebenen Verfahren wird flüssigem Kaffee-Extrakt unter Aufschäumen echtes Röstkaffeepulver zugesetzt. Danach erfolgt die Gefriertrocknung zum Erhalt einer granulatförmigen Kaffeekomposition. Die erhaltenen Zusammensetzungen sind in Bezug auf ihre Eigenschaften jedoch nicht optimal. Bedingt durch die Herstellung unter Aufschäumen des Kaffee-Extrakts weisen die resultierenden Granulate zahlreiche Poren auf, was insbesondere mit einer verringerten Stabilität und einem geringen Schüttgewicht verbunden ist. Insbesondere das geringe Schüttgewicht erschwert die Dosierung, so dass sich die resultierenden Instant-Getränke nicht mit konstanter Qualität herstellen lassen. Darüber hinaus führt das Einmischen des Röstkaffeepulvers unter Aufschäumen zu dem gravierenden Nachteil, dass keine gleichmäßige Verteilung des Röstkaffees in dem Kaffee-Extrakt erfolgt, was ebenfalls die Qualität der resultierenden Instant-Getränke aufgrund nicht optimaler Dosiereigenschaften beeinträchtigt.

Auch in der EP 0 928 561 A1 wird der zusätzliche Einsatz von gemahlenem Röstkaffee bzw. gemahlenen Kaffeebohnen in Instant-Kaffeezusammensetzungen beschrieben. Bei den mittels dem dort beschriebenen Verfahren herstellten Zusammensetzungen wird ebenfalls keine gleichmäßige Verteilung des Röstkaffees bzw. des Röstkaffeepulvers erreicht, was wiederum mit den oben bereits beschriebenen, nicht optimalen Dosiereigenschaften verbunden ist. Darüber hinaus können mit dem beschriebenen Verfahren nur relativ geringe Mengen Röstkaffeepulver inkorporiert werden, was dazu führt, dass sich in den resultierenden Instant-Getränke kein vollmundiges Röstaroma entfaltet.

Die EP 0 220 889 A2 betrifft die Herstellung eines gefriergetrockneten Kaffeeprodukts, welche folgende Verfahrensschritte umfasst: (i) Mischen von Kaffee-Extrakt bei Raumtemperatur mit geröstetem und vermahlenem Kaffee; (ii) Homogenisieren der in Verfahrensschritt (i) erhaltenen Mischung; (iii) Einfüllung der homogenisierten Mischung in einen Mischbehälter und Zuführen einer mindestens äquivalenten gewichtsbezogenen Menge von Kaffee-Extrakt bei einer Temperatur im Bereich von -5 °C bis 30 °C und 20 bis 40 Gew.-% gefrorener Kaffeeteilchen, basierend auf dem Gewicht des homogenisierten Extrakts und des Kaffee-Extrakts; (iv) Einfrieren der erhaltenen Mischung; (v) Vermahlen des gefrorenen Kaffeeprodukts; (vi) Klassieren der Partikel des vermahlenen gefrorenen Kaffeeprodukts; (vii) Gefriertrocknen der gefrorenen Partikel mit der gewünschten Größe.

Die AT 286760 B betrifft ein Verfahren zur Herstellung eines aufgussfertigen, praktisch löslichen Kaffee-Konzentrats unter Mitverwendung von gefriergetrocknetem Kaffee-Extrakt, wobei im Rahmen des Verfahrens einem herkömmlich hergestellten Kaffee-Extrakt eine größere Menge kolloidal feinvermahlener Röstkaffee bei einer im Bereich des Nullpunkts liegenden Temperatur unmittelbar vor der Gefriertrocknung zugesetzt wird und das Gemisch dann durch Gefriertrocknung in ein Feststoffgranulat umgewandelt wird.

Die WO 2012/009668 A1 betrifft ein Verfahren und eine Vorrichtung zur Herstellung mindestens eines Anteils eines Getränks ausgehend von einer covermahlenen, pulverförmigen Zusammensetzung.

Grundsätzlich tritt zudem bei den im Stand der Technik bekannten Verfahren zur Einbringung von Röstkaffeepulver bzw. gemahlenem Kaffeepulver in Instant-Getränkezusammensetzungen das Problem auf, dass das Röstkaffeepulver bereits während der Herstellung der Instant-Kaffeezusammensetzungen bzw. Instant-Getränkezusammensetzungen sedimentiert, was die ungleichmäßige Verteilung des Röstkaffees in den resultierenden Zusammensetzungen noch weiter verstärkt.

Insgesamt sind somit sowohl die im Stand der Technik bekannten Instant-Kaffeezusammensetzungen als solche als auch deren Herstellungsverfahren mit zahlreichen Nachteilen verbunden.

Die Aufgabe der vorliegenden Erfindung liegt somit darin, eine kaffeehaltige Instant-Getränkezusammensetzung bzw. ein Herstellungsverfahren für eine derartige Zusammensetzung bereitzustellen, wobei die zuvor geschilderten Nachteile des Standes der Technik zumindest im Wesentlichen vermieden oder aber zumindest verringert bzw. abgeschwächt werden sollen.

Insbesondere besteht die Aufgabe der vorliegenden Erfindung darin, eine Instant-Getränkezusammensetzung mit verbesserten organoleptischen Eigenschaften, insbesondere einem vollmundigen Röstkaffeearoma und hervorragenden Dosiereigenschaften, bzw. ein Herstellungsverfahren für eine derartige Zusammensetzung bereitzustellen. Im Hinblick auf das Herstellungsverfahren für eine kaffeehaltige Instant-Getränkezusammensetzung ist insbesondere eine möglichst gleichmäßige Inkorporierung von Röstkaffeepulver in der Instant-Getränkezusammensetzung wünschenswert.

Zur Lösung der zuvor geschilderten Aufgabe schlägt die vorliegende Erfindung ein Verfahren nach Anspruch 1 vor; weitere vorteilhafte Ausgestaltungen sind Gegenstand der diesbezüglichen Unteransprüche.

Weiterer Gegenstand der vorliegenden Erfindung ist eine Instant-Getränkezusammensetzung gemäß den diesbezüglichen Ansprüchen.

Schließlich ist Gegenstand der vorliegenden Erfindung die erfindungsgemäße Verwendung der Instant-Getränkezusammensetzung nach der Erfindung gemäß dem diesbezüglichen Verwendungsanspruch.

Es versteht sich von selbst, dass besondere Ausgestaltungen und Ausführungsformen, welche nur im Zusammenhang mit einem Erfindungsaspekt beschrieben sind, auch in Bezug auf die anderen Erfindungsaspekte entsprechend gelten, ohne dass dies ausdrücklich beschrieben ist.

Bei allen nachstehend genannten relativen bzw. prozentualen gewichtsbezogenen Mengenangaben ist zu beachten, dass diese im Rahmen des erfindungsgemäßen Verfahrens vom Fachmann derart auszuwählen sind, dass sie sich in der Summe - gegebenenfalls unter Einbeziehung optionaler weiterer Komponenten bzw. Inhaltsstoffe bzw. Zusatzstoffe bzw. Bestandteile, insbesondere wie nachfolgend definiert - stets zu 100 % bzw. 100 Gew.-% ergänzen. Dies versteht sich für den Fachmann aber von selbst.

Im Übrigen gilt, dass der Fachmann anwendungsbezogen oder einzelfallbedingt von den nachfolgend aufgeführten Mengenangaben abweichen kann, ohne dass er den Rahmen der vorliegenden Erfindung verlässt.

Gegenstand der vorliegenden Erfindung ist somit - gemäß einem **ersten** Aspekt der vorliegenden Erfindung - ein Verfahren zur Herstellung einer Instant-Getränkezusammensetzung, insbesondere für ein kaffeehaltiges Instant-Getränk und/oder ein Kaffee-Getränk, wobei das Verfahren die nachfolgenden Verfahrensschritte umfasst:
(a) Bereitstellen mindestens eines Kaffee-Extrakts, insbesondere in Form eines wässrigen Fluidextrakts;
(b) nachfolgendes Aufkonzentrieren des Kaffee-Extrakts zum Erhalt eines eingedickten Kaffee-Extrakts (Dickextrakt);
(c) anschließendes Abkühlen des in Verfahrensschritt (b) erhaltenen eingedickten Kaffee-Extrakts auf Temperaturen unterhalb von 0 °C derart, dass der abgekühlte eingedickte Kaffee-Extrakt jeweils eine gegenüber dem aus (b) erhaltenen Kaffee-Extrakt erhöhte Viskosität und/oder verringerte Fließfähigkeit aufweist; und
(d) nachfolgendes und/oder während Verfahrensschritt (c) durchgeführtes, insbesondere nachfolgendes Einarbeiten und/oder Inkorporieren von Röstkaffeepulver in den abgekühlten eingedickten Kaffee-Extrakt unter Einmischen und/oder Einrühren des Röstkaffees zum Erhalt einer homogenen und/oder gleich-mäßigen Verteilung des Röstkaffees in dem abgekühlten Kaffee-Extrakt oder in dem abgekühlten eingedickten Kaffee-Extrakt,
wobei in Verfahrensschritt (a) und/oder (b) der Kaffee-Extrakt auf einen Feststoffgehalt im Bereich von 20 bis 75 Gew.-%, bezogen auf den Kaffee-Extrakt, eingestellt wird und
wobei in Verfahrensschritt (c) der abgekühlte Kaffee-Extrakt auf eine dynamische Viskosität im Bereich von 200 bis 10.000 mPa·s eingestellt wird, bezogen auf eine Temperatur im Bereich von -10 °C bis 10 °C.

Denn die Anmelderin hat in völlig überraschender Weise gefunden, dass die zuvor geschilderten Nachteile des Standes der Technik, insbesondere die mit einer ungleichmäßigen Verteilung von Röstkaffeepulver in Instant-Getränkezusammensetzungen verbundenen Nachteile, überwunden werden können, wenn im Rahmen des Herstellungsverfahrens die Viskosität des eingesetzten Kaffee-Extrakts vor dem Einmischen bzw. Einbringen von insbesondere partikulärem Röstkaffee durch Abkühlen des Extrakts auf Temperaturen unterhalb von 0 °C im Vergleich zum ursprünglich eingesetzten Kaffee-Extrakt erhöht wird. Durch das Abkühlen wird die Fließfähigkeit des Kaffeeextrakts derart verringert, dass zwar ein Durchmischen des Kaffee-Extrakts zum homogenen bzw. gleichmäßigen Einmischen des Röstkaffees möglich ist, das Sedimentieren bzw. Absinken des Röstkaffeepulvers, welches zu einer ungleichmäßigen Verteilung führen würde, jedoch verhindert wird.

Insgesamt weist die vorliegende Erfindung zahlreiche Vorteile und Besonderheiten auf, welche sie gegenüber dem Stand der Technik auszeichnen und welche im Nachfolgenden detailliert, aber nicht abschließend beschrieben sind:
Das erfindungsgemäße Verfahren erlaubt insbesondere aufgrund des Abkühlens des eingedickten Kaffee-Extrakts zur Verringerung von dessen Fließfähigkeit bzw. zur Erhöhung von dessen Viskosität ein homogenes bzw. gleichmäßiges Einmischen des Röstkaffees in den Kaffee-Extrakt, was wiederum zu einer homogenen Verteilung des Röstkaffees in den finalen Instant-Getränkezusammensetzungen führt.

Die homogene bzw. gleichmäßige Verteilung der Röstkaffeepartikel in den Teilchen der resultierenden Instant-Getränkezusammensetzung lässt sich insbesondere durch bildgebende Verfahren, insbesondere mikroskopische Verfahren, nachweisen. Im Rahmen der von der Anmelderin durchgeführten Analysen ist bei mikroskopischer Betrachtung der Teilchen der erfindungsgemäßen Instant-Getränkezusammensetzung die homogene Verteilung der eingeschlossenen Röstkaffeepartikel in den einzelnen Teilchen bzw. Granulaten deutlich zu erkennen.

Insbesondere wird durch das erfindungsgemäße Verfahren das Problem des Standes der Technik überwunden, dass aufgrund eines Absinkens bzw. Sedimentierens des Röstkaffeepulvers im Kaffee-Extrakt während des Herstellungsprozesses eine ungleichmäßige Verteilung der Röstkaffeepartikel in den fertigen Teilchen der Instant-Getränkezusammensetzung resultiert. Die gleichmäßige Verteilung des Röstkaffees schlägt sich unmittelbar in den Eigenschaften der Instant-Getränkezusammensetzungen nieder, wie es auch im Folgenden detailliert erläutert wird, insbesondere im Hinblick auf die organoleptischen bzw. sensorischen Eigenschaften.

Die erfindungsgemäße Verfahrensführung erlaubt es zudem, verhältnismäßig große Mengen an Röstkaffeepulver in die Instant-Getränkezusammensetzungen einzuarbeiten bzw. zu inkorporieren, was sich wiederum positiv auf deren geschmackliche Eigenschaften, insbesondere die erwünschte Röstkaffeenote, auswirkt.

Auch ist das erfindungsgemäße Verfahren äußerst komfortabel und praktisch in der Handhabung und darüber hinaus ökonomisch, da es auch hohe Durchsatzraten erlaubt, insbesondere bei Einsatz einer kontinuierlichen Verfahrensführung.

Die mittels des erfindungsgemäßen Verfahrens hergestellten Instant-Getränkezusammensetzungen zeichnen sich im Gegensatz zu zahlreichen kaffeehaltigen Instant-Getränkezusammensetzungen des Standes der Technik unter anderem aufgrund der verhältnismäßig großen inkorporierbaren Mengen des Röstkaffeepulvers durch ihre hervorragenden organoleptischen Eigenschaften aus. Insbesondere entfaltet sich in den auf Basis der erfindungsgemäßen Instant-Getränkezusammensetzungen zubereiteten kaffeehaltigen Getränken ein vollmundiges Röstkaffeearoma, welches zumindest im Wesentlichen dem Aroma von frisch aufgebrühtem Kaffee entspricht.

Darüber hinaus besitzen die mit Hilfe des erfindungsgemäßen Verfahrens hergestellten Instant-Getränkezusammensetzungen hervorragende Dosiereigenschaften, was insbesondere der homogenen bzw. gleichmäßigen Verteilung des Röstkaffeepulvers in den der Instant-Getränkezusammensetzungen zugrundeliegenden Teilchen geschuldet ist, da sich auf diese Weise die finalen Getränke mit konstanter Qualität herstellen lassen.

Zudem besitzen die mit dem Verfahren nach der vorliegenden Erfindung hergestellten Instant-Getränkezusammensetzungen ein optimales Schüttgewicht sowie einen optimal eingestellten Restfeuchtegehalt, was die Dosiereigenschaften weitergehend verbessert.

Die erfindungsgemäße Zusammensetzung kann insgesamt in vielfältiger Weise ausgestaltet sein. Bevorzugte Ausführungsformen sowie im Rahmen der vorliegenden Erfindung verwendete Begrifflichkeiten sind daher im Folgenden detailliert erläutert:
Was den Begriff "Kaffee-Extrakt", wie er im Rahmen der vorliegenden Erfindung verwendet wird, anbelangt, so wird hierunter ein insbesondere wässriger Extrakt verstanden, welcher Kaffeearoma, also die Aromastoffe aus gerösteten Kaffeebohnen, enthält.

Insgesamt kann Kaffeearoma auf mehr als 650 verschiedenen Komponenten basieren, von denen viele erst im Rahmen des Röstprozesses ausgehend von Saccharose, freien Aminosäuren und Chlorogensäure gebildet werden. Üblicherweise besteht Kaffeearoma vorwiegend aus Furanen, Pyrazinen, Pyrrolen und Ketonen, wobei die schwefelhaltigen bzw. mit Schwefel substituierten Furane und Dithiolane als besonders aromawirksam gelten.

Im Allgemeinen wird Kaffee-Extrakt durch wässrige Extraktion, insbesondere Perkolation, von gerösteten Kaffeebohnen gewonnen, wobei im Allgemeinen ein Fluid- oder Flüssigextrakt resultiert. Derartige Fluid- bzw. Flüssigextrakte können durch Verringerung des Wasseranteils bzw. Erhöhung des Feststoffgehalts weiter zu Dickextrakten mit halbfester Konsistenz bzw. Trockenextrakten mit fester Konsistenz verarbeitet werden.

Für weitergehende Einzelheiten zum Begriff des Kaffee-Extrakts kann insbesondere verwiesen werden Römpp Lexikon, Lebensmittelchemie, 9. Auflage, 1997, Georg-Thieme Verlag, Stuttgart/New York, Stichwort: "Kaffee-Aroma", sowie die darin zitierte Literatur, deren diesbezüglicher Inhalt hiermit durch Bezugnahme eingeschlossen ist.

Unter dem Begriff "Viskosität" wird üblicherweise das Maß der Zähflüssigkeit von Fluiden, im Rahmen der vorliegenden Erfindung insbesondere auch von Suspensionen, verstanden. Der Kehrwert der Viskosität ist die Fluidität, d. h. die Fließfähigkeit eines Fluids. Je größer die Viskosität ist, desto dickflüssiger bzw. weniger fließfähig ist das Fluid. Im Umkehrschluss führt eine geringere Viskosität zu einer höheren Fließfähigkeit bzw. Dünnflüssigkeit. Insbesondere wird die Viskosität mit dem Effekt der "inneren Reibung" erklärt, welcher dahingehend zu verstehen ist, dass Teilchen zäher Flüssigkeiten stärker aneinander gebunden und somit unbeweglicher sind. Vereinfacht kann die innere Reibung anhand der Bewegung zweier übereinander liegender und verzahnter Molekülschichten veranschaulicht werden. Beim Fließen gleiten die Moleküle aneinander vorbei, wobei eine gewisse Kraft notwendig ist, um die Verzahnung zu überwinden. Der Zusammenhang zwischen der notwendigen Kraft einerseits und den Eigenschaften des Fluids bzw. der Suspension andererseits wird durch die Viskosität definiert. Im Rahmen der vorliegenden Erfindung wird unter der Viskosität insbesondere die dynamische Viskosität η verstanden, welche üblicherweise in der Einheit mPa·s angegeben wird. Die Viskosität von Flüssigkeiten kann mit speziell dafür beschaffenen Messgeräten, wie Viskosimetern bzw. Rheometern, gemessen werden. Für weitergehende Einzelheiten zum Begriff der Viskosität kann insbesondere verwiesen werden auf Römpp, Chemielexikon, 10. Auflage, Georg-Thieme Verlag, Stuttgart/New York, Stichwort: "Viskosität", sowie die darin zitierte Literatur, deren diesbezüglicher Inhalt hiermit durch Bezugnahme eingeschlossen ist.

Was den Begriff der "homogenen" bzw. "gleichmäßigen" Verteilung des partikulären Röstkaffees, vorzugsweise des Röstkaffeepulvers, in dem Kaffee-Extrakt bzw. der Instant-Getränkezusammensetzung anbelangt, so ist dieser im Rahmen der vorliegenden Erfindung dahingehend zu verstehen, dass über das gesamte System, insbesondere über die gesamte Instant-Getränkezusammensetzung, gleiche Partikelkonzentrationen des Röstkaffeepulvers vorliegen. Insgesamt ist somit das gesamte System, insbesondere die Instant-Getränkezusammensetzung in ihrer Gesamtheit, zumindest im Wesentlichen frei von starken Konzentrationsdifferenzen bzw. Konzentrationsgefällen in Bezug auf die Röstkaffeepartikel. In einzelne Teilchen annähernd gleicher oder ähnlicher Größe der Instant-Getränkezusammensetzungen ist somit jeweils eine zumindest im Wesentlichen gleiche oder ähnliche Anzahl von Röstkaffeepartikeln inkorporiert, so dass sich insgesamt über die gesamte Instant-Getränkezusammensetzung zumindest im Wesentlichen eine gleichmäßige Verteilung des eingearbeiteten bzw. eingemischten Röstkaffeepulvers ergibt.

Das erfindungsgemäße Verfahren kann in vielfältiger Weise ausgeführt werden. Bevorzugte Ausführungsformen bzw. Details zum erfindungsgemäßen Verfahren sind im Folgenden erläutert:
Was die obigen Verfahrensschritte anbelangt, so werden diese in erfindungsgemäß bevorzugter Weise in der oben genannten Reihenfolge nacheinander bzw. aufeinander abfolgend durchgeführt. Grundsätzlich ist es im Rahmen der vorliegenden Erfindung jedoch auch möglich, dass mit dem Abkühlen des Kaffee-Extrakts gemäß Verfahrensschritt (c) bereits im Rahmen von Verfahrensschritt (a) bzw. (b) begonnen wird.

Was die Verfahrensschritte (c) und (d) anbelangt, so können diese gemäß einer erfindungsgemäß bevorzugten Ausführungsform aufeinander abfolgend bzw. nacheinander durchgeführt werden, d. h. Verfahrensschritt (c) und Verfahrensschritt (d) können als separate bzw. sukzessiv aufeinanderfolgende Schritte realisiert werden (d. h. zunächst Verfahrensschritt (c), dann nachfolgend Verfahrensschritt (d)). Somit kann erfindungsgemäß das Einarbeiten bzw. Inkorporieren des insbesondere partikulären Röstkaffees in den bereits zumindest im Wesentlichen vollständig abgekühlten Kaffee-Extrakt bzw. in den bereits in den bereits zumindest im Wesentlichen vollständig abgekühlten und eingedickten Kaffee-Extrakt erfolgen.

Zudem liegt es aber auch im Rahmen der vorliegenden Erfindung, wenn gemäß einer alternativen Ausführungsform Verfahrensschritt (c) und Verfahrensschritt (d), beginnend mit Verfahrensschritt (c), ineinander übergehend durchgeführt werden. Folglich kann erfindungsgemäß das Einarbeiten bzw. Inkorporieren des insbesondere partikulären Röstkaffees nach Beginn, aber noch während des noch nicht abgeschlossenen Abkühlvorgangs des Kaffee-Extrakts erfolgen, wobei Verfahrensschritt (d) bzw. der Einarbeitungsvorgang noch nach erfolgtem Abkühlen (d. h. auch noch nach Beendigung von Verfahrensschritt (c)) fortgesetzt werden kann.

Es liegt jedoch gleichermaßen im Rahmen der vorliegenden Erfindung, wenn gemäß einer weiteren alternativen Ausführungsform der vorliegenden Erfindung Verfahrensschritt (c) und Verfahrensschritt (d) in einem gemeinsamen Schritt durchgeführt werden, wonach nämlich Verfahrensschritt (d) gewissermaßen vollständig innerhalb von Verfahrensschritt (c) durchgeführt wird, so dass gemäß dieser Ausführungsform das Einarbeiten bzw. Inkorporieren des insbesondere partikulären Röstkaffees mit bzw. nach Beginn der Abkühlung des Kaffee-Extrakts erfolgt, aber das Einarbeiten bzw. Inkorporieren und somit Verfahrensschritt (d) noch vor Beendigung des Abkühlens bzw. vor Beendigung von Verfahrensschritt (c) abgeschlossen wird.

Zusammenfassend können die Verfahrensschritte (c) und (d) somit sowohl - gemäß einer erfindungsgemäß bevorzugten Ausführungsform - aufeinander abfolgend und vollständig separat voneinander als auch ineinander übergehend bzw. - wenn auch erfindungsgemäß weniger bevorzugt - derart erfolgen, dass Verfahrensschritt (d) vollständig innerhalb bzw. mit Verfahrensschritt (c) durchgeführt wird.

Was speziell den erfindungsgemäßen Verfahrensschritt (a) zur Bereitstellung des Kaffee-Extrakts anbelangt, so wird dieser insbesondere durch Fest/Flüssig-Extraktion, vorzugsweise durch Perkolation, durchgeführt. Als Auszugs- bzw. Extraktionsmittel wird üblicherweise Wasser eingesetzt. Die Bereitstellung des Kaffee-Extrakts, insbesondere durch die zuvor genannten Methoden bzw. Verfahren, ist dem Fachmann an sich geläufig, so dass keine weitergehenden Ausführungen an dieser Stelle erforderlich sind. Üblicherweise resultiert im Rahmen der vorliegenden Erfindung aus Verfahrensschritt (a) ein Fluid- oder Flüssigextrakt, welcher wie nachfolgend beschrieben weiterverarbeitet wird.

Im Rahmen des erfindungsgemäßen Verfahrens ist es vorgesehen, dass der im Rahmen von Verfahrensschritt (a) hergestellte Fluid- bzw. Flüssigextrakt in einem nachfolgenden Verfahrensschritt (b) auf einen höheren Feststoffgehalt aufkonzentriert wird, da sich dies im Hinblick auf das spätere Einmischen bzw. Einbringen des vorzugsweise partikulären Röstkaffees als vorteilhaft erwiesen hat. Insbesondere kann durch das weitere Aufkonzentrieren die Bildung größerer Eiskristalle während des Abkühlens auf Temperaturen unterhalb von 0 °C signifikant verhindert werden. Vorzugsweise erfolgt die weitere Aufkonzentrierung im Rahmen eines Verfahrensschrittes (b). Es ist jedoch auch möglich, bereits im Rahmen von Verfahrensschritt (a) den Feststoffgehalt in dem Kaffee-Extrakt weiter zu erhöhen.

Gemäß der vorliegenden Erfindung ist es weiterhin vorgesehen, dass in Verfahrensschritt (a) bzw. (b), vorzugsweise in Verfahrensschritt (b), der Kaffee-Extrakt auf einen Feststoffgehalt im Bereich von 25 bis 70 Gew.-%, noch mehr bevorzugt im Bereich von 30 bis 60 Gew.-%, bezogen auf den Kaffee-Extrakt, eingestellt wird.

Auch zur Erhöhung des Feststoffgehalts bzw. zum Aufkonzentrieren des Kaffee-Extrakts werden dem Fachmann an sich geläufige Verfahren eingesetzt, zu welchen an dieser Stelle keine weitergehenden Ausführungen erforderlich sind. Üblicherweise handelt es sich dabei um Verfahren, welche unter Atmosphärendruck (101,325 kPa) oder gegebenenfalls unter gegenüber Atmosphärendruck reduziertem Druck, insbesondere Unterdruck, durchgeführt werden.

Der im Rahmen des Verfahrensschritts (a) bzw. (b) bereitgestellte, eingedickte Kaffee-Extrakt wird im anschließenden Verfahrensschritt (c) einem Kühlschritt unterzogen, um die Fließfähigkeit des Extrakts zu verringern bzw. um dessen Viskosität zu erhöhen. Wie zuvor bereits beschrieben, wird auf diese Weise die homogene und gleichmäßige Verteilung von vorzugsweise partikulärem Röstkaffee in dem Kaffee-Extrakt gewährleistet, da ein Sedimentieren von den Röstkaffeepartikeln verhindert wird.

Insbesondere Verfahrensschritt (c) ist somit in Bezug auf die erfindungsgemäßen Vorteile und Besonderheiten von wesentlicher Bedeutung. Durch das Abkühlen des eingedickten Kaffee-Extrakts auf die zuvor definierten Temperaturbereiche entsteht nämlich eine Konsistenz im Sinne von sogenanntem "slushed ice" oder "ice slurry", welche sozusagen auf Basis einer Suspension von Eispartikeln bzw. Eiskristallen, Wasser sowie gegebenenfalls mindestens einem gefrierpunktsenkenden Stoff (d. h. die Inhalts- bzw. Aromastoffe des Kaffee-Extrakts) ausgebildet ist. Um die Konsistenz von "slushed ice" bzw. "ice slurry" erhalten zu können und um ein Festfrieren bzw. Agglomerieren der Eispartikel oder Eiskristalle zu verhindern, ist es vorteilhaft, Scherkräfte in die Suspension einzubringen, insbesondere durch Rühren. Darüber hinaus bewirken die Aromastoffe im Kaffee-Extrakt eine Gefrierpunktserniedrigung, was weitergehend einem Festfrieren der Suspension entgegenwirkt, so dass sich im weiteren Verlauf des Verfahrens der vorzugsweise partikuläre Röstkaffee gleichmäßig und homogen in die Suspension einbringen lässt. Was die Viskosität bzw. Zähflüssigkeit einer solchen "ice slurry"-artigen Konsistenz anbelangt, so entspricht diese ungefähr der Konsistenz von Honig oder Speiseeis, d. h. die Masse ist weiterhin durchmischbar bzw. rührbar, weist aber gegenüber dem eingedickten Kaffee-Extrakt, insbesondere wie er in Verfahrensschritt (b) erhalten wird, eine signifikant verringerte Fließfähigkeit auf.

In diesem Zusammenhang hat es sich als vorteilhaft erwiesen, wenn in dem erfindungsgemäßen Verfahrensschritt (c) der eingedickte Kaffee-Extrakt, wie er in Verfahrensschritt (b) erhalten wird, auf eine Temperatur im Bereich von -20 bis 0 °C, insbesondere im Bereich von -15 bis -2 °C, vorzugsweise im Bereich von - 10 bis -4 °C, abgekühlt wird. Aufgrund der oben bereits genannten Vorteile des Aufkonzentrieren bzw. Eindickens für den weiteren Verfahrensverlauf ist es vorgesehen, in Verfahrensschritt (c) den eingedickten bzw. aufkonzentrierten Kaffee-Extrakt, wie er in Verfahrensschritt (b) erhalten wird, einzusetzen.

Zudem ist es erfindungsgemäß bevorzugt, Verfahrensschritt (c) unter Eintrag von Scherkräften, insbesondere unter Mischen bzw. Rühren, durchzuführen. Auf diese Weise wird weiterführend dazu beigetragen, ein Festfrieren des Kaffee-Extrakts zu verhindern.

Üblicherweise wird auch Verfahrensschritt (c) unter Atmosphärendruck durchgeführt. Gegebenenfalls kann Verfahrensschritt (c) jedoch auch unter gegenüber Atmosphärendruck reduziertem Druck, insbesondere Unterdruck, durchgeführt werden.

Erfindungsgemäß ist es somit im Rahmen des erfindungsgemäßen Verfahrens vorgesehen, dass in Verfahrensschritt (c) die Viskosität des eingedickten Kaffee-Extrakts, wie er in Verfahrensschritt (b) erhalten wird, erhöht wird. Mit anderen Worten ist es vorgesehen, dass in Verfahrensschritt (c) die Fließfähigkeit des eingedickten Kaffee-Extrakts, wie er in Verfahrensschritt (b) erhalten wird, herabgesetzt wird.

Insgesamt bedeutet dies, dass der Kaffee-Extrakt bzw. der eingedickte Kaffee-Extrakt, wie er in Verfahrensschritt (a) bzw. (b) erhalten wird, im Rahmen von Verfahrensschritt (c) zwar in einem noch fließfähigen Zustand verbleibt, die Viskosität jedoch gegenüber dem ursprünglich eingesetzten Extrakt, wie er vor Beginn des Abkühlens bzw. vor Beginn von Verfahrensschritt (c) vorliegt, zunimmt bzw. die Fließfähigkeit abnimmt.

Erfindungsgemäß wird somit in Verfahrensschritt (c) bevorzugt derart verfahren, dass der eingedickte Kaffee-Extrakt, wie er in Verfahrensschritt (b) erhalten wird, nicht erstarrt bzw. nicht vollständig gefriert bzw. nicht fest wird. Wie aus den vorherigen Ausführungen bereits hervorgeht, wird ein vollständiges Festfrieren bzw. Erstarren des Kaffee-Extrakts einerseits durch den Eintrag von Scherkräften, insbesondere durch Mischen bzw. Rühren, und andererseits durch die Inhaltsstoffe, insbesondere Aromastoffe, des Kaffee-Extrakts als solche verhindert, da diese eine Gefrierpunktserniedrigung in dem abgekühlten und eingedickten Kaffee-Extrakt bewirken.

Wie aus den obigen Ausführungen weiterhin hervorgeht, erfolgt das Abkühlen in Verfahrensschritt (c) unter Ausbildung von insbesondere partikulären Eiskristallen bzw. Eispartikeln in dem abgekühlten Kaffee-Extrakt. Dabei werden die Eiskristalle bzw. Eispartikel in dem wässrigen Kaffee-Extrakt dispergiert, insbesondere suspendiert, bzw. liegen hierin dispergiert, insbesondere suspendiert, vor. Mit anderen Worten erfolgt das Abkühlen in Verfahrensschritt (c) unter Ausbildung einer Dispersion, insbesondere Suspension, von partikulären Eiskristallen bzw. Eispartikeln in dem abgekühlten Kaffee-Extrakt.

Wie ebenfalls zuvor beschrieben, wird durch die partikulären Eiskristalle bzw. Eispartikel sozusagen der Feststoffanteil des im Rahmen von Verfahrensschritt (c) entstehenden "ice slurry" gebildet. Die partikulären Eiskristalle bzw. die Eispartikel sind dabei gleichmäßig über das gesamte System, d. h. über den abgekühlten und vorzugsweise angedickten Kaffee-Extrakt, verteilt und werden sozusagen von der wässrigen Phase einerseits sowie den Inhaltsstoffen bzw. Aromastoffen des Kaffee-Extrakts andererseits umgeben.

Was die Größe der partikulären Eiskristalle bzw. Eispartikel in dem abgekühlten Kaffee-Extrakt anbelangt, so kann diese variieren und entspricht im Allgemeinen den üblichen Größen von in "ice slurry" vorliegenden Eiskristallen bzw. Eispartikeln. Im Rahmen der vorliegenden Erfindung bzw. des erfindungsgemäßen Verfahrens weisen die partikulären Eiskristalle bzw. Eispartikel somit eine Teilchengröße, insbesondere einen mittleren Teilchendurchmesser, vorzugsweise bestimmt als D50-Wert, im Bereich von 0,01 bis 5 mm, insbesondere im Bereich von 0,05 bis 2,5 mm, vorzugsweise im Bereich von 0,07 bis 2 mm, bevorzugt im Bereich von 0,1 bis 1 mm, auf.

Die Größenangaben bzw. die Größenordnungen der partikulären Eiskristalle bzw. Eispartikel beziehen sich dabei vorzugsweise auf eine angenommene Kugelform. Weichen die Eiskristalle bzw. Eispartikel von einer kugelförmigen Struktur bzw. Kugelform ab, können sich die Größenangaben bzw. Größenordnungen gleichermaßen auf eine angenommene Kugelform beziehen, welche ein identisches Volumen wie die zugrundeliegenden und von der Kugelform abweichenden Teilchen bzw. Partikel aufweist. Hierzu kann insbesondere auf Rawle, A., "Basic Principles of Particle-Size Analysis", Surface Coatings International, Part A, Issue 2003/02, verwiesen werden.

Was die Bestimmung der Teilchengröße im Allgemeinen anbelangt, so kann diese anhand von dem Fachmann an sich wohlbekannten Verfahren vorgenommen werden. Insbesondere können die Teilchengrößen mit Bestimmungsverfahren auf Basis von Siebmethoden, Sedimentationsmethoden, Lichtbeugungsmethoden, (licht-)mikroskopischen Methoden oder dergleichen bestimmt werden. Erfindungsgemäß bevorzugt sind Siebmethoden und (licht-)mikroskopische Methoden, insbesondere Siebmethoden, vorzugsweise die Siebmethode gemäß DIN 66165.

Was Verfahrensschritt (c) bzw. den abgekühlten Kaffee-Extrakt weiterhin anbelangt, so liegt der Gehalt an partikulären Eiskristallen bzw. Eispartikeln in dem abgekühlten Kaffee-Extrakt erfindungsgemäß bevorzugt im Bereich von 5 bis 99 Gew.-%, insbesondere im Bereich von 10 bis 98 Gew.-%, vorzugsweise im Bereich von 20 bis 97 Gew.-%, bevorzugt im Bereich von 30 bis 95 Gew.-%, besonders bevorzugt im Bereich von 50 bis 90 Gew.-%, bezogen auf den abgekühlten Kaffee-Extrakt.

Insbesondere kann es vorgesehen sein, dass der Gehalt an partikulären Eiskristallen bzw. Eispartikeln in dem abgekühlten Kaffee-Extrakt mindestens 5 Gew.-%, insbesondere mindestens 10 Gew.-%, vorzugsweise mindestens 20 Gew.-%, bevorzugt mindestens 30 Gew.-%, besonders bevorzugt mindestens 50 Gew.-%, bezogen auf den abgekühlten Kaffee-Extrakt, beträgt.

Weiterhin kann es im Rahmen der vorliegenden Erfindung vorgesehen sein, dass der Gehalt an partikulären Eiskristallen bzw. Eispartikeln in dem abgekühlten Kaffee-Extrakt höchstens 99 Gew.-%, insbesondere höchstens 98 Gew.-%, vorzugsweise höchstens 97 Gew.-%, bevorzugt höchstens 95 Gew.-%, besonders bevorzugt höchstens 90 Gew.-%, bezogen auf den abgekühlten Kaffee-Extrakt, beträgt.

Was die Viskosität des abgekühlten Kaffee-Extrakts im Speziellen anbelangt, so ist es erfindungsgemäß vorgesehen, dass in Verfahrensschritt (c) der abgekühlte Kaffee-Extrakt auf eine dynamische Viskosität im Bereich von 200 bis 10.000 mPa·s, insbesondere im Bereich von 200 bis 8.000 mPa·s, vorzugsweise im Bereich von 500 bis 5.000 mPa·s, bevorzugt im Bereich von 750 bis 3.000 mPa·s, besonders bevorzugt im Bereich von 1.000 bis 2.500 mPa·s, eingestellt wird, insbesondere bezogen auf eine Temperatur im Bereich von -10 °C bis 10 °C, vorzugsweise bezogen auf eine Temperatur von -5 °C. Durch Einstellung des Kaffee-Extrakts auf eine dynamische Viskosität im zuvor definierten Bereich bleibt dieser einerseits in einem fließfähigen bzw. weiterhin mischbaren Zustand, andererseits wird jedoch ein Absinken bzw. Sedimentieren der einzumischenden Röstkaffeepartikel verhindert.

Wie zuvor bereits beschrieben, wird im Rahmen der vorliegenden Erfindung die Viskosität, insbesondere die dynamische Viskosität, als Maß für die Fließfähigkeit bzw. Zähflüssigkeit einer Suspension, nämlich des abgekühlten Kaffee-Extrakts mit einer Konsistenz eines "ice slurry", herangezogen. Dabei bezieht sich die oben angegebene Viskosität, insbesondere dynamische Viskosität, auf die Viskosität des abgekühlten Extrakts in Temperaturbereichen, wie sie zuvor für den erfindungsgemäßen Verfahrensschritt (c) angegeben wurden, insbesondere auf eine Temperatur von -5 °C. Im Rahmen der vorliegenden Erfindung kann es dabei vorgesehen sein, dass der Schritt des Abkühlens bzw. der Abkühlprozess so lange durchgeführt wird, bis eine definierte Viskosität erreicht wird. Gleichermaßen kann es jedoch auch vorgesehen sein, dass der Kaffee-Extrakt auf eine definierte Temperatur heruntergekühlt wird und eine der oben genannten dynamischen Viskositäten aus der Temperatur resultiert.

Was die Methoden bzw. Verfahren zur Bestimmung der Viskosität, insbesondere der dynamischen Viskosität, des abgekühlten Kaffee-Extrakts anbelangt, so sind diese als solche dem Fachmann bekannt, so dass keine weiteren diesbezüglichen Informationen an dieser Stelle notwendig sind. Insbesondere können Messgeräte wie Kapillarviskosimeter, Rotationsviskosimeter, Kugelfall-Viskosimeter oder Brookfield-Viskosimeter zur Bestimmung der Viskosität des aus Verfahrensschritt (c) erhaltenen abgekühlten Kaffee-Extrakts eingesetzt werden.

Insbesondere beziehen sich die zuvor angegebenen Viskositätswerte auf eine Bestimmung gemäß DIN 53015 (z. B. mittels Kugelfall-Viskosimeter, z. B. RheoTec Messtechnik GmbH, Deutschland).

Erfindungsgemäß schließt sich nach Maßgabe der obigen Ausführengen im Rahmen der vorliegenden Erfindung dem Verfahrensschritt (c) zum Abkühlen des Kaffee-Extrakts ein weiterer Verfahrensschritt (d) an, welcher dem Einmischen bzw. Einbringen des insbesondere partikulären Röstkaffees in den abgekühlten Kaffee-Extrakt dient.

Was Verfahrensschritt (d) im Speziellen anbelangt, so ist es hierbei erfindungsgemäß vorgesehen, dass der insbesondere partikuläre Röstkaffee zumindest im Wesentlichen vollständig in den vorzugsweise eingedickten und vorzugsweise abgekühlten wässrigen Kaffee-Extrakt eingearbeitet bzw. inkorporiert wird bzw. darin vorliegt. In Verfahrensschritt (d) wird also der insbesondere partikuläre Röstkaffee in dem vorzugsweise eingedickten und vorzugsweise abgekühlten wässrigen Kaffee-Extrakt homogen bzw. gleichmäßig verteilt.

Wie zuvor bereits beschrieben, umfasst der abgekühlte Kaffee-Extrakt Eiskristalle bzw. Eispartikel mit definierten Teilchengrößen, eine wässrigen Phase sowie gefrierpunktserniedrigende Substanzen auf Basis der Inhalts- bzw. Aromastoffe des Kaffee-Extrakts. Im Rahmen des erfindungsgemäßen Verfahrensschritts (d) wird der partikuläre Röstkaffee, insbesondere das Kaffeepulver, gleichmäßig bzw. homogen innerhalb der flüssigen Phase, welche darüber hinaus auch gleichmäßig bzw. homogen mit Eiskristallen bzw. Eispartikeln versetzt ist, verteilt, so dass die Konzentration der Röstkaffeepartikel über die ganze wässrige Phase zumindest im Wesentlichen einheitlich ist. Die gleichmäßige bzw. homogene Verteilung der Röstkaffeepartikel in Verfahrensschritt (d) bewirkt, dass auch in der resultierenden Instant-Getränkezusammensetzung der Röstkaffee gleichmäßig verteilt ist.

Was die eingesetzten Mengen des insbesondere partikulären Röstkaffees anbelangt, so können diese in weiten Bereichen variieren. In Bezug auf die organoleptischen Eigenschaften der Instant-Getränkezusammensetzungen werden besonders gute Ergebnisse erhalten, wenn in Verfahrensschritt (d) der insbesondere partikuläre Röstkaffee in einer Menge im Bereich von 1 bis 60 Gew.-%, insbesondere im Bereich von 2 bis 50 Gew.-%, vorzugsweise im Bereich von 4 bis 40 Gew.-%, bevorzugt im Bereich von 5 bis 30 Gew.-%, besonders bevorzugt im Bereich von 10 bis 20 Gew.-%, bezogen auf den abgekühlten Kaffee-Extrakt, in den abgekühlten Kaffee-Extrakt eingemischt bzw. inkorporiert wird.

Mit anderen Worten ist es erfindungsgemäß vorgesehen, dass der in Verfahrensschritt (d) erhaltene abgekühlte Kaffee-Extrakt den insbesondere partikulären Röstkaffee in einer Menge im Bereich von 1 bis 60 Gew.-%, insbesondere im Bereich von 2 bis 50 Gew.-%, vorzugsweise im Bereich von 4 bis 40 Gew.-%, bevorzugt im Bereich von 5 bis 30 Gew.-%, besonders bevorzugt im Bereich von 10 bis 20 Gew.-%, bezogen auf den abgekühlten Kaffee-Extrakt, enthält.

Die Inkorporierung bzw. Einmischung derart großer Mengen in die Instant-Getränkezusammensetzungen wird erst durch das erfindungsgemäße Verfahren, insbesondere die Erhöhung der Viskosität des Kaffee-Extrakts im Rahmen von Verfahrensschritt (c), ermöglicht.

Der partikuläre Röstkaffee, insbesondere die Partikel des Röstkaffeepulvers, weisen vorzugsweise eine definierte Teilchengröße auf. Besonders gute Ergebnisse, insbesondere im Hinblick auf die Aromaeigenschaften der resultierenden Instant-Getränkezusammensetzungen, werden erhalten, wenn der in Verfahrensschritt (d) eingesetzte, insbesondere partikuläre Röstkaffee eine mittlere Teilchengröße, insbesondere bestimmt als D50-Wert, im Bereich von 1 bis 500 µm, insbesondere im Bereich von 5 bis 250 µm, vorzugsweise im Bereich von 10 bis 100 µm, bevorzugt im Bereich von 20 bis 80 µm, besonders bevorzugt im Bereich von 30 bis 60 µm, aufweist. Der Einsatz von partikulärem Röstkaffee mit den vorgenannten Teilchengrößen gewährleistet, dass die resultierenden Instant-Getränkezusammensetzungen ein vollmundiges Röstaroma besitzen, welches zumindest im Wesentlichen dem von frisch aufgebrühtem Kaffee entspricht, aber dennoch keine Sedimentationsneigung besitzen und kein unangenehmes Mundgefühl verursachen.

In Bezug auf die Bestimmung der Teilchengröße wird auf obige Ausführungen im Zusammenhang mit der Bestimmung der Teilchengröße der im Rahmen von Verfahrensschritt (c) entstehenden Eiskristalle bzw. Eispartikel verwiesen.

Besonders vorteilhaft in Bezug auf die Aromaeigenschaften der Instant-Getränkezusammensetzungen ist im Hinblick auf Verfahrensschritt (d) darüber hinaus und gemäß einer alternativen Ausführungsform der vorliegenden Erfindung der Einsatz von insbesondere partikulärem Röstkaffee mit größerem Teilchendurchmesser, vorzugsweise in Form von grob vermahlenem und/oder vorzugsweise einmalig gewalztem Röstkaffee.

Ein partikulärer Röstkaffee mit größerem Teilchendurchmesser bildet jedoch im Allgemeinen im resultierenden Instant-Getränk mitunter ein grobes Sediment, was auch bei den Konsumenten allgemein unerwünscht ist. Im Rahmen des erfindungsgemäßen Verfahrens ist es jedoch überraschenderweise gelungen, dieses Problem zu überwinden, und zwar indem in Verfahrensschritt (d), wie zuvor angeführt, insbesondere partikulärer Röstkaffee mit größerem Teilchendurchmesser, vorzugsweise in Form von grob vermahlenem und/oder vorzugsweise einmalig gewalztem Röstkaffee, eingesetzt wird. Dabei ist es erfindungsgemäß vorgesehen, dass der insbesondere partikuläre Röstkaffee mit größerem Teilchendurchmesser im Rahmen der Durchführung von Verfahrensschritt (d) bzw. in Verfahrensschritt (d) zerkleinert bzw. zermahlen wird und/oder vorzugsweise auf die zuvor definierten Teilchengrößen eingestellt wird. Gemäß dieser erfindungsgemäßen Ausführungsform kann somit eine weiterführende Zerkleinerung des eingesetzten Röstkaffees *in situ* bei der Durchführung von Verfahrensschritt (d) erfolgen.

In Verfahrensschritt (d) kann somit derart verfahren werden, dass eine weitere Vermahlung bzw. Verkleinerung des partikulären Röstkaffees erfolgt, und zwar insbesondere auf die zuvor definierten Teilchengrößen. Insbesondere kann es in diesem Zusammenhang vorgesehen sein, dass die Vermahlung bzw. Zerkleinerung mittels Eintrag von Scherkräften erfolgt bzw. dass Verfahrensschritt (d) in einer Dispergiervorrichtung durchgeführt wird, welche auch das insbesondere gleichzeitige Vermahlen der Röstkaffeepartikel während der Einmischung bzw. Inkorporierung in den abgekühlten Kaffee-Extrakt erlaubt. Dadurch, dass der im Rahmen dieser besonderen Ausführungsform eingesetzte partikuläre Röstkaffee noch im grob vermahlenen und/oder lediglich gewalzten Zustand verwendet wird, sind noch mehr Aromastoffe im Röstkaffeepulver erhalten, als dies bei einem bereits fein vermahlenen Röstkaffee der Fall ist.

In diesem Zusammenhang sollte der gemäß dieser alternativen Ausführungsform der vorliegenden Erfindung für die weitere Zerkleinerung in Verfahrensschritt (d) vorgesehene partikuläre Röstkaffee mit größerem Teilchendurchmesser, bezogen auf den Zustand vor der weiteren Zerkleinerung in Verfahrensschritt (d), eine mittlere Teilchengröße, insbesondere bestimmt als D50-Wert, im Bereich von 10 bis 2.500 µm, insbesondere im Bereich von 50 bis 1.500 µm, vorzugsweise im Bereich von 75 bis 1.000 µm, bevorzugt im Bereich von 90 bis 750 µm, besonders bevorzugt im Bereich von 100 bis 500 µm, aufweisen. Nach Durchführung von Verfahrensschritt (d) mit der weiteren Zerkleinerung sollte der diesbezüglich eingesetzte partikuläre Röstkaffee mit größerem Teilchendurchmesser, insbesondere der in Verfahrensschritt (d) resultierende partikuläre Röstkaffee, bezogen auf den Zustand nach Durchführung von Verfahrensschritt (d), eine mittlere Teilchengröße, insbesondere bestimmt als D50-Wert, im Bereich von 1 bis 500 µm, insbesondere im Bereich von 5 bis 250 µm, vorzugsweise im Bereich von 10 bis 100 µm, bevorzugt im Bereich von 20 bis 80 µm, besonders bevorzugt im Bereich von 30 bis 60 µm, aufweisen, wie zuvor angeführt.

Was die erfindungsgemäße Verfahrensführung weiterhin anbelangt, so hat es sich als besonders vorteilhaft erwiesen, wenn Verfahrensschritt (c) bzw. Verfahrensschritt (d) kontinuierlich, semikontinuierlich oder diskontinuierlich, insbesondere kontinuierlich oder semikontinuierlich, vorzugsweise kontinuierlich, durchgeführt wird bzw. werden. Insgesamt ist das erfindungsgemäße Verfahren somit äußerst komfortabel und praktisch in der Handhabung, und dies bei gleichzeitig guter Verfahrensökonomie und einer geringen Kontaminationsgefahr, insbesondere bei kontinuierlicher Verfahrensführung.

Im Zusammenhang mit der erfindungsgemäßen Verfahrensführung ist es darüber hinaus bevorzugt, dass Verfahrensschritt (c) bzw. Verfahrensschritt (d) in einem kühlbaren, insbesondere für eine kontinuierliche, semikontinuierliche oder diskontinuierliche Verfahrensführung geeigneten Mischreaktor durchgeführt wird bzw. werden. Als besonders geeignet haben sich in diesem Zusammenhang Schabekühler, Dispergiervorrichtungen oder Tieftemperaturextruder erwiesen. Insbesondere der Einsatz von Dispergiervorrichtungen erlaubt die Einstellung der Partikelgröße des eingesetzten Röstkaffees im Rahmen von Verfahrensschritt (d), wie zuvor beschrieben. Grundsätzlich ist die Bedienung bzw. der Einsatz derartiger Vorrichtungen bzw. die Durchführung eines solchen Mischverfahrens dem Fachmann bekannt, so dass diesbezüglich keine weiteren Ausführungen notwendig sind.

Im Rahmen der Weiterverarbeitung des mit Röstkaffee versetzten bzw. ausgerüsteten und abgekühlten Kaffee-Extrakts ist es erfindungsgemäß zudem bevorzugt, wenn in einem weiteren, sich Verfahrensschritt (d) anschließenden Verfahrensschritt (e) der in Verfahrensschritt (d) erhaltene, mit Röstkaffee ausgerüstete Kaffee-Extrakt zumindest im Wesentlichen vollständig verfestigt bzw. zumindest im Wesentlichen in einen festen Aggregatzustand überführt wird. Dies kann insbesondere dadurch erfolgen, dass der in Verfahrensschritt (d) erhaltene, mit Röstkaffee ausgerüstete Kaffee-Extrakt zumindest im Wesentlichen vollständig gefroren wird, insbesondere mittels Tiefgefrieren, vorzugsweise Schockfrosten bzw. Schockgefrieren.

Im Rahmen der vorliegenden Erfindung hat sich nämlich gezeigt, dass insbesondere Schockfrosten bzw. Schockgefrieren eine übermäßige Bildung von Eiskristallen in der "ice slurry"-artigen Kaffee-Extraktmasse zumindest im Wesentlichen vermeiden bzw. verhindern kann, was vorteilhaft in Bezug auf die Homogenität bzw. die gleichmäßige Verteilung des Röstkaffeepulvers in der finalen Instant-Getränkezusammensetzung ist.

Was den erfindungsgemäßen Verfahrensschritt (e) im Speziellen anbelangt, so ist es erfindungsgemäß bevorzugt, wenn die zumindest im Wesentlichen vollständige Verfestigung bzw. die zumindest im Wesentlichen vollständige Überführung in einen festen Aggregatzustand bzw. das zumindest im Wesentlichen vollständige Gefrieren des in Verfahrensschritt (d) erhaltenen, mit Röstkaffee ausgerüsteten Kaffee-Extrakts durch Abkühlen auf Temperaturen im Bereich von -100 bis -15 °C, insbesondere im Bereich von -80 bis -20 °C, vorzugsweise im Bereich von -70 bis -30 °C, bevorzugt im Bereich von -60 bis -40 °C, erfolgt.

In diesem Zusammenhang kann es insbesondere vorgesehen sein, dass die zumindest im Wesentlichen vollständige Verfestigung bzw. die zumindest im Wesentlichen vollständige Überführung in einen festen Aggregatzustand bzw. das zumindest im Wesentlichen vollständige Gefrieren des in Verfahrensschritt (d) erhaltenen, mit Röstkaffee ausgerüsteten Kaffee-Extrakts ohne Eintrag von Scherkräften oder aber unter abnehmendem, insbesondere ausklingendem Eintrag von Scherkräften erfolgt.

Der Begriff "unter abnehmendem bzw. ausklingendem Eintrag von Scherkräften" ist dahingehend zu verstehen, dass der Eintrag der Scherkräfte vorzugsweise kontinuierlich abnimmt bzw. weniger wird. Auf diese Weise wird gewährleistet, dass bis zum Erstarren bzw. bis zur vollständigen Verfestigung der mit partikulärem Röstkaffe versetztem Kaffee-Extrakt-Masse eine weitere Verteilung der Komponenten, insbesondere des partikulären Röstkaffees, erfolgt, was im Ergebnis die besonders homogene bzw. gleichmäßige Verteilung des Röstkaffees bzw. des Röstkaffeepulvers weitergehend verbessert.

Im Rahmen der weiteren Verarbeitung des tiefgefrorenen und mit Röstkaffee versetzten Kaffee-Extrakts zum Erhalt einer Instant-Getränkezusammensetzung ist es erfindungsgemäß bevorzugt, in einem weiteren, sich Verfahrensschritt (e) anschließenden Verfahrensschritt (f) den mit Röstkaffee ausgerüsteten und verfestigten, insbesondere zumindest im Wesentlichen vollständig gefrorenen Kaffee-Extrakt, wie er insbesondere in Verfahrensschritt (e) erhalten wird, zu zerkleinern, vorzugsweise mittels Brechen, Granulieren bzw. Vermahlen.

Im Zusammenhang mit dem erfindungsgemäßen Verfahrensschritt (f) ist es dabei insbesondere bevorzugt, wenn die resultierenden Teilchen eine Teilchengröße, insbesondere eine mittlere Teilchengröße, vorzugsweise bestimmt als D50-Wert, im Bereich von 0,1 bis 10 mm, insbesondere im Bereich von 0,3 bis 8 mm, vorzugsweise im Bereich von 0,5 bis 5 mm, bevorzugt im Bereich von 1 bis 4 mm, aufweisen. Die Einstellung einer solchen Teilchengröße führt zu hervorragenden Dosiereigenschaften sowie zu gleichzeitig optimalen Verpackungseigenschaften. Was konkret die Teilchenform anbelangt, so kann es zudem vorgesehen sein, dass die Teilchen eine zumindest im Wesentlichen kugelförmige, stäbchenförmige, würfelartige oder unregelmäßige Form aufweisen. In Bezug auf die Bestimmung der Teilchengröße wird auf obige Ausführungen im Zusammenhang mit der Bestimmung der Teilchengröße der im Rahmen von Verfahrensschritt (c) entstehenden Eiskristalle verwiesen.

Um schließlich die Instant-Getränkezusammensetzung als solche bereitzustellen, ist es erfindungsgemäß üblicherweise vorgesehen, in einem weiteren, sich Verfahrensschritt (f) anschließenden Verfahrensschritt (g) die Teilchen des mit Röstkaffee ausgerüsteten und verfestigten, insbesondere zumindest im Wesentlichen vollständig gefrorenen Kaffee-Extrakts, wie er insbesondere in Verfahrensschritt (f) erhalten wird, zum Erhalt der Instant-Getränkezusammensetzung zu trocknen, insbesondere unter gegenüber Atmosphärendruck verringertem Druck bzw. Unterdruck. Erfindungsgemäß bevorzugt wird eine solche Trocknung mittels Gefriertrocknung oder Vakuumbandtrocknung durchgeführt.

Der gegenüber Atmosphärendruck verringerte Druck bzw. Unterdruck wird insbesondere derart eingestellt, dass die Trocknung unter Sublimation erfolgt, d. h. die verfestigte bzw. tiefgefrorene Kaffee-Extraktmasse derart getrocknet wird, dass das enthaltene Wasser, ohne in den flüssigen Aggregatszustand überzugehen, direkt in die Gasphase übergeht und auf diese Weise entfernt wird. Üblicherweise liegt der für die Sublimation erforderliche Druck im Bereich von etwa 0,1 bis 2 mbar, vorzugsweise im Bereich von 0,3 bis 1 mbar.

Weiterhin kann es im Rahmen der vorliegenden Erfindung vorgesehen sein, dass die Teilchen der Instant-Getränkezusammensetzung im Rahmen von Verfahrensschritt (g) auf eine Gesamtrestfeuchte im Bereich von 0,01 bis 5 Gew.-%, insbesondere im Bereich von 0,1 bis 4 Gew.-%, vorzugsweise im Bereich von 1 bis 3 Gew.-%, bezogen auf die Teilchen der Instant-Getränkezusammensetzung, eingestellt werden.

Durch den erfindungsgemäßen Verfahrensschritt (g), im Rahmen dessen die Trocknung erfolgt, wird darüber hinaus die Größe der aus Verfahrensschritt (f) erhaltenen Teilchen verringert. Vorzugsweise weisen die in Verfahrensschritt (g) erhaltenen Teilchen eine Teilchengröße, insbesondere eine mittlere Teilchengröße, vorzugsweise bestimmt als D50-Wert, im Bereich von 0,05 bis 9 mm, insbesondere im Bereich von 0,1 bis 7 mm, vorzugsweise im Bereich von 0,3 bis 4 mm, bevorzugt im Bereich von 0,5 bis 3 mm, auf. Weiterhin weisen die Teilchen eine zumindest im Wesentlichen kugelförmige, stäbchenförmige, würfelartige oder unregelmäßige Form auf.

In Bezug auf die Bestimmung der Teilchengröße wird auf obige Ausführungen im Zusammenhang mit der Bestimmung der Teilchengröße der im Rahmen von Verfahrensschritt (c) entstehenden Eiskristalle bzw. Eispartikel verwiesen.

Im Rahmen von Verfahrensschritt (g) resultieren somit granulatförmige kaffeehaltige Zusammensetzungen bzw. granulatförmige kaffeehaltige Instant-Getränkezusammensetzungen auf Basis definierter Teilchen mit festgelegter Form einerseits und festgelegter Größe andererseits.

Insbesondere ist Gegenstand der vorliegenden Erfindung somit - gemäß einer besonders bevorzugten Ausführungsform - ein Verfahren zur Herstellung einer Instant-Getränkezusammensetzung, insbesondere für ein kaffeehaltiges Instant-Getränk und/oder ein Kaffee-Getränk, nach einem der vorangehenden Ansprüche, wobei das Verfahren die nachfolgenden Verfahrensschritte umfasst:
(a) Bereitstellen mindestens eines Kaffee-Extrakts, insbesondere in Form eines wässrigen Fluidextrakts;
(b) nachfolgendes Aufkonzentrieren des Kaffee-Extrakts, insbesondere Fluidextrakts, vorzugsweise zum Erhalt eines eingedickten Kaffee-Extrakts (Dickextrakt), wobei in Verfahrensschritt (a) und/oder (b) der Kaffee-Extrakt auf einen Feststoffgehalt im Bereich von 20 bis 75 Gew.-%, bezogen auf den Kaffee-Extrakt, eingestellt wird;
(c) anschließendes Abkühlen des in Verfahrensschritt (b) erhaltenen eingedickten Kaffee-Extrakts auf Temperaturen unterhalb von 0 °C und/oder Abkühlen des in Verfahrensschritt (b) erhaltenen eingedickten Kaffee-Extrakts derart, dass der abgekühlte eingedickte Kaffee-Extrakt jeweils eine gegenüber dem aus Verfahrensschritt (b) erhaltenen Kaffee-Extrakt erhöhte Viskosität und/oder verringerte Fließfähigkeit aufweist, wobei in Verfahrensschritt (c) der abgekühlte Kaffee-Extrakt auf eine dynamische Viskosität im Bereich von 200 bis 10.000 mPa·s eingestellt wird, bezogen auf eine Temperatur im Bereich von -10 °C bis 10 °C;
(d) nachfolgendes und/oder während Verfahrensschritt (c) durchgeführtes, insbesondere nachfolgendes Einarbeiten und/oder Inkorporieren von insbesondere partikulärem Röstkaffee, insbesondere Röstkaffeepulver, in den abgekühlten eingedickten Kaffee-Extrakt, insbesondere unter Einmischen und/oder Einrühren des Röstkaffees, vorzugsweise zum Erhalt einer homogenen und/oder gleichmäßigen Verteilung des Röstkaffees in dem abgekühlten eingedickten Kaffee-Extrakt;
(e) nachfolgend zumindest im Wesentlichen vollständiges Verfestigen des in Verfahrensschritt (d) erhaltenen, mit Röstkaffee ausgerüsteten Kaffee-Extrakts und/oder Überführen des in Verfahrensschritt (d) erhaltenen, mit Röstkaffee ausgerüsteten Kaffee-Extrakts in einem zumindest im Wesentlichen festen Aggregatzustand, insbesondere mittels Tiefgefrieren, vorzugsweise Schockfrosten und/oder Schockgefrieren;
(f) nachfolgende Zerkleinerung des mit Röstkaffee ausgerüsteten verfestigten Kaffee-Extrakts, insbesondere wie in Verfahrensschritt (e) erhalten, in einzelne Teilchen, insbesondere mittels Brechen, Granulieren und/oder Vermahlen; und
(g) nachfolgende Trocknung der Teilchen des mit Röstkaffee ausgerüsteten, verfestigten, insbesondere zumindest im Wesentlichen vollständig gefrorenen Kaffee-Extrakts, insbesondere wie in Verfahrensschritt (f) erhalten, vorzugsweise mittels Gefriertrocknung oder Vakuumbandtrocknung, zum Erhalt der Instant-Getränkezusammensetzung.

Insgesamt ist das erfindungsgemäße Verfahren somit mit dem Vorteil verbunden, dass die Teilchen der Instant-Getränkezusammensetzung den insbesondere partikulären Röstkaffee homogen bzw. gleichmäßig verteilt aufweisen. Insbesondere liegt der insbesondere partikuläre Röstkaffee homogen bzw. gleichmäßig verteilt in den Teilchen der Instant-Getränkezusammensetzung vor.

Die homogene Verteilung des insbesondere partikulären Röstkaffees in den Teilchen der Instant-Getränkezusammensetzung kann insbesondere durch bildgebende bzw. mikroskopische Verfahren untersucht werden. Sowohl an der Oberfläche der Teilchen als auch in deren Querschnitt sind bei mikroskopischer Betrachtung der Teilchen die Röstkaffeepartikel erkennbar. Die von der Anmelderin durchgeführten Studien haben dabei gezeigt, dass sowohl oberflächlich als auch im Inneren der Teilchen der Instant-Getränkezusammensetzung eine homogene bzw. gleichmäßige Verteilung des partikulären Röstkaffees vorliegt.

Insbesondere lassen sich somit mittels des erfindungsgemäßen Verfahrens Instant-Getränkezusammensetzungen herstellen, welche sich durch hervorragende organoleptische Eigenschaften, insbesondere ein vollmundiges Röstaroma, aufzeichnen. Im Rahmen der vorliegenden Erfindung wird somit ein komfortabel und ökonomisch zu handhabendes Herstellungsverfahren bereitgestellt, welches insbesondere eine gleichmäßige bzw. homogene Verteilung von Röstkaffeepulver in Instant-Getränkezusammensetzungen erlaubt. Insbesondere eine gleichmäßige Verteilung von Röstkaffeepulver in Instant-Getränkezusammensetzungen hat sich bislang im Stand der Technik als problematisch und nicht realisierbar erwiesen. Dieses Problem konnte im Rahmen der vorliegenden Erfindung erfolgreich überwunden werden.

Weiterer Gegenstand der vorliegenden Erfindung - gemäß einem **zweiten** Aspekt der vorliegenden Erfindung - ist eine Instant-Getränkezusammensetzung, insbesondere eine kaffeehaltige Instant-Getränkezusammensetzung, welche sich vorzugsweise zur Herstellung eines kaffeehaltigen Instant-Getränks oder zur Herstellung eines Kaffeegetränks eignet und welche durch das zuvor beschriebene Herstellungsverfahren erhalten werden kann.

Durch das erfindungsgemäße Verfahren gemäß dem ersten erfindungsgemäßen Aspekt, welches zuvor im Detail beschrieben ist, wird ermöglicht, dass die Teilchen der Instant-Getränkezusammensetzung vorzugsweise partikulären Röstkaffee in äußerst homogener bzw. gleichmäßiger Verteilung aufweisen, wie auch die von der Anmelderin durchgeführten Studien gezeigt haben. Bei mikroskopischer Betrachtung der Teilchen der erfindungsgemäßen Instant-Getränkezusammensetzung ist sowohl an der Oberfläche der Teilchen als auch in deren Inneren eine vollkommen homogene bzw. gleichmäßige Verteilung klar erkennbar.

Die erfindungsgemäße Instant-Getränkezusammensetzung bzw. die daraus hergestellten Getränke zeichnen sich - insbesondere aufgrund der homogenen bzw. gleichmäßigen Verteilung des vorzugsweise partikulären Röstkaffees - durch ihre hervorragenden organoleptischen Eigenschaften aus. Insbesondere entfaltet sich ein vollmundiges Röstaroma, wie es sich üblicherweise nur mit frisch aufgebrühtem Kaffee erzielen lässt.

Weiterhin zeichnet sich die erfindungsgemäße Instant-Getränkezusammensetzung auch durch eine hervorragende Stabilität, insbesondere Lagerstabilität, aus, was einerseits auf die erfindungsgemäße Verfahrensführung, welche eine destabilisierende Einbringung von Gas- bzw. Luftblasen, wie sie beispielsweise durch Aufschäumen erfolgt, vermeidet, und andererseits auf die Einstellung eines definierten Restfeuchtegehalts zurückzuführen ist.

Eine insbesondere kaffeehaltige Instant-Getränkezusammensetzung mit den zuvor definierten vorteilhaften Eigenschaften konnte erstmals im Rahmen des erfindungsgemäßen Verfahrens von der Anmelderin bereitgestellt werden. Wie aus den vorstehenden Ausführungen hervorgeht, schlägt sich die erfindungsgemäße Verfahrensführung unmittelbar in den Produkteigenschaften nieder und vermittelt deren vorteilhafte Eigenschaften.

Für weitergehende Einzelheiten zu diesem Erfindungsaspekt kann zur Vermeidung unnötiger Wiederholungen auf obige Ausführungen zu dem ersten Erfindungsaspekt verwiesen werden, welche in Bezug auf diesen Erfindungsaspekt entsprechend gelten.

Schließlich ist Gegenstand der vorliegenden Erfindung - gemäß einem **dritten** Aspekt der vorliegenden Erfindung - die Verwendung einer Instant-Getränkezusammensetzung, insbesondere einer Instant-kaffeehaltigen Getränkezusammensetzung, wie sie zuvor definiert wurde, zur Herstellung eines kaffeehaltigen Instant-Getränks oder zur Herstellung eines Kaffeegetränks.

Für weitergehende Einzelheiten zu diesem Erfindungsaspekt kann zur Vermeidung unnötiger Wiederholungen auf obige Ausführungen zu den übrigen Erfindungsaspekten verwiesen werden, welche in Bezug auf diesen Erfindungsaspekt entsprechend gelten.

Weitere Ausgestaltungen, Abwandlungen und Variationen sowie Vorteile der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der folgenden Ausführungsbeispiele veranschaulicht, welche die vorliegende Erfindung jedoch keinesfalls beschränken.

### AUSFÜHRUNGSBEISPIELE:

Es wurden erfindungsgemäße und nichterfindungsgemäße kaffeehaltige Instant-Getränkezusammensetzungen, welche sich durch Auflösen in vorzugsweise heißem Wasser für die Herstellung eines Kaffee-Getränks eignen, mit Hilfe erfindungsgemäßer bzw. nichterfindungsgemäßer Verfahren hergestellt. Die resultierenden verschiedenen Instant-Getränkezusammensetzungen wurden bezüglich ihrer Eigenschaften, insbesondere der organoleptischen Eigenschaften, des Dosierverhaltens sowie der Stabilität, analysiert und miteinander vergleichen.

### 1. Herstellung erfindungsgemäßer Instant-Getränkezusammensetzungen

### a) Herstellung von Instant-Getränkezusammensetzungen unter Einsatz von feinstvermahlenem Röstkaffee

Zur Herstellung von erfindungsgemäßen Instant-Getränkezusammensetzungen mit feinstvermahlenem Röstkaffee wird zunächst eine Extraktion von geröstetem und vermahlenem Röstkaffee mittels Perkolation durchgeführt, wobei ein Kaffee-Extrakt in Form eines Fluid- bzw. Flüssigextrakts resultiert. In einem weiteren Verfahrensschritt wird der Fluid- bzw. Flüssigextrakt mit Hilfe dem Fachmann wohlbekannter Verfahren auf einen Feststoffgehalt im Bereich von 40 bis 50 Gew.-%, bezogen auf den Kaffee-Extrakt, aufkonzentriert, so dass ein Dickextrakt resultiert.

Der zuvor hergestellte Dickextrakt als solcher besitzt bereits eine gegenüber dem Fluid- bzw. Flüssigextrakt erhöhte Viskosität, wobei die Viskosität durch Abkühlen des Dickextrakts auf eine Temperatur von -6 °C in einem Schabekühler unter stetigem Rühren vorzugsweise noch weiter erhöht wird, bis sie circa mit der Viskosität von Honig bzw. Speiseeis vergleichbar ist. Durch das Abkühlen des Dickextrakts erhält dieser eine Konsistenz ähnlich der Konsistenz von sogenanntem "ice slurry", welches auf Wasser, Eispartikeln bzw. Eiskristallen und gefrierpunktserniedrigenden Substanzen basiert.

Anschließend wird dem abgekühlten Dickextrakt, welcher im Vergleich zu den ursprünglich eingesetzten Kaffee-Extrakten eine erhöhte Viskosität besitzt, feinstvermahlener Röstkaffee mit mittleren Teilchengrößen, insbesondere gemessen als D50-Wert, von höchstens 40 µm zugesetzt. Die bevorzugt einzusetzende Menge des feinstvermahlenen Röstkaffees liegt bei etwa 15 Gew.-%, bezogen auf den Kaffee-Extrakt. Durch (Ein-)Rühren wird der feinstvermahlene Röstkaffee homogen bzw. gleichmäßig in dem abgekühlten Dickextrakt verteilt. Überraschenderweise wurde im Rahmen des erfindungsgemäßen Verfahrens festgestellt, dass durch die Erhöhung der Viskosität mittels Abkühlen der zugesetzte feinstvermahlene Röstkaffee nicht mehr sedimentieren kann und so eine homogene bzw. gleichmäßige Verteilung gewährleistet werden kann.

Nach dem Einbringen und Vermischen des feinstvermahlenen Röstkaffees wird der mit Röstkaffee versetzte und abgekühlte Kaffee-Extrakt mittels Tiefgefrieren in einen festen Aggregatzustand versetzt und anschließend durch Granulierverfahren zerkleinert. Es resultieren würfelartige Teilchen, welche anschließend mittels Vakuumbandtrocknung weiter getrocknet werden. Im Rahmen der Vakuumbandtrocknung wird die resultierende Instant-Getränkezusammensetzung auf eine Restfeuchte von etwa 1 bis 4 Gew.-%, bezogen auf die Instant-Getränkezusammensetzung, eingestellt.

In den würfelartigen Teilchen der kaffeehaltigen und gefriergetrockneten Instant-Getränkezusammensetzung sind mit einer Lupe die eingeschlossenen Röstkaffeepartikel zu erkennen. Insbesondere ist deutlich zu erkennen, dass die Teilchen der Instant-Getränkezusammensetzung die Röstkaffeepartikel in homogener bzw. gleichmäßiger Verteilung aufweisen. Darüber hinaus zeichnen sich die Teilchen der erfindungsgemäßen Instant-Getränkezusammensetzungen durch eine hervorragende mechanische Stabilität aus. Auch neigt die Instant-Getränkezusammensetzung nicht zur Staubbildung.

### b) Herstellung von Instant-Getränkezusammensetzungen unter Einsatz von einmalig gewalztem vermahlenen Röstkaffee

Die Herstellung von erfindungsgemäßen Instant-Getränkezusammensetzungen unter Einsatz von einmalig gewalztem vermahlenem Röstkaffee erfolgt entsprechend der zuvor beschriebenen Ausführungsform des erfindungsgemäßen Verfahrens.

Zunächst wird - wie zuvor beschrieben - ebenfalls ein Fluid- bzw. Flüssigextrakt auf Basis vermahlenem Röstkaffeepulver hergestellt, welcher im darauf folgenden Schritt auf einen Feststoffgehalt von 40 bis 50 Gew.-%, bezogen auf den Kaffee-Extrakt, zu einem Dickextrakt weiter aufkonzentriert wird. Der Schritt des Abkühlens des Dickextrakts auf Temperaturen von -6 °C zur Erhöhung der Viskosität erfolgt ebenfalls, wie zuvor beschrieben.

In Bezug auf die Einmischung bzw. Einbringung des Röstkaffees in den abgekühlten Dickextrakt unterscheidet sich diese weitere bevorzugte Ausführungsform von der zuvor beschriebenen Ausführungsform. Bei dieser Ausführungsform wird lediglich grob vermahlener und einmalig gewalzter Röstkaffee in den abgekühlten Dickextrakt eingemischt. Bei grob vermahlenem und gewalztem Röstkaffee treten im Vergleich zu feinstvermahlenem Röstkaffee geringere Verluste an Aromastoffen bis zur Weiterverarbeitung des Röstkaffees auf. Um jedoch die Bildung eines groben Sediments des Röstkaffees in den resultierenden Instant-Getränk zu verhindern, erfolgt erst im Rahmen der Einmischung des grob vermahlenen Röstkaffees in den Dickextrakts eine weitere Vermahlung bzw. Zerkleinerung des Röstkaffees auf Partikelgrößen, vorzugsweise gemessen als D50-Wert, von höchstens 40 µm, vorzugsweise durch den Einsatz einer Dispergiermaschine zur Einmischung.

Die weitere Verarbeitung, d. h. das Versetzen in einen festen Aggregatzustand, die Zerkleinerung sowie die anschließende Trocknung, erfolgen analog zu der ersten Ausführungsform.

Bei mikroskopischer Betrachtung der resultierenden Teilchen der hergestellten Instant-Getränkezusammensetzungen ist ebenfalls die homogene und gleichmäßige Verteilung der Röstkaffeepartikel erkennbar. Auch die mittels dieses Verfahrens hergestellten Teilchen der Instant-Getränkezusammensetzungen zeichnen sich durch ihre hervorragende mechanische Stabilität aus und neigen nicht zur Staubbildung.

### 2. Herstellung von nichterfindungsgemäßen Instant-Getränkezusammen Setzungen

### a) Herstellung von Instant-Getränkezusammensetzungen ohne Viskositätserhöhung bzw. ohne Abkühlschritt

Die Herstellung von Instant-Getränkezusammensetzungen ohne den erfindungsgemäßen Schritt der Erhöhung der Viskosität des Kaffee-Extrakts erfolgt entsprechend der zuvor unter Ausführungsbeispiel 1. a) beschriebenen Ausführungsform des erfindungsgemäßen Verfahrens mit Ausnahme des Verfahrensschritts des Abkühlens des zuvor eingedickten Kaffee-Extrakts. Stattdessen wird das partikuläre Röstkaffeepulver direkt im Anschluss an das Eindicken in den Kaffee-Dickextrakt unter Rühren eingemischt. Beim Einmischen der Röstkaffeepartikel fällt bereits auf, dass ein großer Anteil der Röstkaffeepartikel sedimentiert. Der weitere Verfahrensverlauf, d. h. die Überführung in den festen Aggregatzustand, die nachfolgende Zerkleinerung und die abschließende Trocknung, erfolgen ebenfalls entsprechend wie zuvor unter Ausführungsbeispiel 1. a) beschrieben. Es resultiert eine kaffeehaltige Instant-Getränkezusammensetzung auf Basis würfelartiger Teilchen.

Bei mikroskopischer Betrachtung der würfelartigen Teilchen der kaffeehaltigen und gefriergetrockneten Instant-Getränkezusammensetzung sind teilweise Röstkaffeepartikel-Agglomerate in und an den Teilchen der Instant-Getränkezusammensetzung zu erkennen. Insbesondere fällt auf, dass ein bestimmter Anteil an Teilchen der Instant-Getränkezusammensetzung vollkommen frei von Röstkaffeepartikeln ist oder nur geringfügige Mengen an Röstkaffeepartikeln enthält, während ein anderer Anteil an Teilchen der Instant-Getränkezusammensetzung eine übermäßige Anhäufung von Röstkaffeepartikeln enthält. Insgesamt sind die Röstkaffeepartikel somit äußerst ungleichmäßig bzw. inhomogen in den Teilchen der Zusammensetzung verteilt, so dass insgesamt über die gesamte Instant-Getränkezusammensetzung hinweg große Inhomogenitäten bzw. Konzentrationsunterschiede in Bezug auf die Röstkaffeepartikel bestehen.

### b) Herstellung von Instant-Getränkezusammensetzungen unter Aufschäumen

Weiterhin wird eine nichterfindungsgemäße Instant-Getränkezusammensetzung unter Aufschäumen des Kaffee-Extrakts entsprechend dem eingangs gewürdigten Dokument EP 2 436 269 A1 hergestellt. In diesem Zusammenhang wird ebenfalls entsprechend der unter Ausführungsbeispiel 1. a) beschriebenen erfindungsgemäßen Ausführungsweise verfahren, jedoch mit dem Unterschied, dass der eingedickte Kaffee-Extrakt, insbesondere der Dickextrakt, vor dem Einmischen des Röstkaffeepulvers nicht abgekühlt, sondern unter Eintrag eines Gemischs von Stickstoff und Kohlendioxid aufgeschäumt wird. Auch bei dieser Vorgehensweise fällt beim Einmischen der Röstkaffeepartikel auf, dass ein großer Anteil der Röstkaffeepartikel sedimentiert. Der weitere Verfahrensverlauf, d. h. die Überführung in den festen Aggregatzustand, die nachfolgende Zerkleinerung und die abschließende Trocknung, erfolgen ebenfalls entsprechend wie zuvor unter Ausführungsbeispiel 1. a) beschrieben. Es resultiert eine kaffeehaltige Instant-Getränkezusammensetzung auf Basis würfelartiger Teilchen.

Die resultierende kaffeehaltige Instant-Getränkezusammensetzung fällt insbesondere durch ihr äußerst geringes Schüttgewicht im Vergleich zu den übrigen herstellten Zusammensetzungen auf, was auf die Einlagerung von Gasblasen in den Teilchen, bedingt durch das Aufschäumen, zurückzuführen ist; infolge dessen weisen die Teilchen der Instant-Getränkezusammensetzung eine signifikant verringerte Stabilität auf: Bereits unter geringem mechanischem Druck kommt es zum Zerfall der der Instant-Getränkezusammensetzung zugrundeliegenden Teilchen. Bei mikroskopischer Betrachtung der Teilchen ist entsprechend dem vorangehenden Vergleichsbeispiel 2. a) deutlich zu erkennen, dass die eingelagerten Röstkaffeepartikel inhomogen über die Instant-Getränkezusammensetzung verteilt bzw. inkorporiert sind.

### 3. Analyse der organoleptischen Eigenschaften und des Dosierverhaltens der Instant-Getränkezusammensetzungen

Auf Basis der zuvor beschriebenen erfindungsgemäßen und nichterfindungsgemäßen kaffeehaltigen Instant-Getränkezusammensetzungen wurden durch Aufbrühen mit Wasser kaffeehaltige Instant-Getränke hergestellt. Dazu werden pro Portion bzw. Tasse jeweils 2 Teelöffel der jeweiligen Instant-Getränkezusammensetzung in circa 80 °C heißem Wasser aufgelöst. Anschließend erfolgt eine Analyse der resultierenden Instant-Getränke auf ihre organoleptischen Eigenschaften, insbesondere im Hinblick auf die Vollmundigkeit des Röstaromas einerseits sowie die Dosiereigenschaften in Bezug auf eine konstante Qualität der Instant-Getränke andererseits.

Beide auf Basis der erfindungsgemäßen Instant-Getränkezusammensetzungen hergestellten kaffeehaltigen Instant-Getränke zeichnen sich durch ihre hervorragenden geschmacklichen Eigenschaften aus; insbesondere entfaltet sich in den fertigen Getränken ein vollmundiges Röstaroma, welches weitgehend dem Aroma von frisch aufgebrühtem Bohnenkaffee entspricht. Was die organoleptischen Eigenschaften weiterhin anbelangt, hat sich zudem der Einsatz des erfindungsgemäßen Verfahrens gemäß der zweiten, bevorzugten Ausführungsform als besonders vorteilhaft erwiesen, da sich durch den Einsatz von grob vermahlenem und einmalig gewalztem Röstkaffee, welcher erst beim Einmischen in den Kaffee-Extrakt vermahlen wird, das Röstaroma noch weitergehend steigern lässt.

Darüber hinaus besitzen die erfindungsgemäßen Instant-Getränkezusammensetzungen gute Dosiereigenschaften. Einerseits tendieren die Instant-Getränkezusammensetzungen nicht zur Staubbildung. Andererseits schlägt sich die durch das erfindungsgemäße Verfahren erzielte homogene bzw. gleichmäßige Verteilung des Röstkaffeepulvers in den Teilchen der Instant-Getränkezusammensetzung direkt im konstanten Aroma über die gesamte Charge der jeweiligen Instant-Getränkezusammensetzungen nieder, da über die gesamte Instant-Getränkezusammensetzung einheitliche Röstkaffeepartikelkonzentrationen vorliegen. Für die fertigen Instant-Getränke bedeutet dies insbesondere, dass sie in Bezug auf die Intensität der Aromaeigenschaften mit konstanter Qualität hergestellt werden können.

Die mit den nichterfindungsgemäßen Instant-Getränkezusammensetzungen erzielten Ergebnisse hingegen sind nicht zufriedenstellend, und zwar weder in Bezug auf die organoleptischen Eigenschaften noch in Bezug auf das Dosierverhalten. Die starken Differenzen der Röstkaffeepartikelkonzentrationen in den Instant-Getränkezusammensetzungen führen zu sehr unterschiedlichen Qualitäten in Bezug auf die organoleptischen Eigenschaften der daraus hergestellten Instant-Getränke. Bei zu hoher Konzentration der Röstkaffeepartikel in den Teilchen der Zusammensetzungen besitzen die hergestellten Getränke einen äußerst bitteren Geschmack, wobei zum Teil auch ein unangenehmes Mundgefühl aufgrund der großen Menge an Röstkaffeepartikeln resultiert, wohingegen zu geringe Röstkaffeepartikelmengen zu einem nicht vollmundigen Kaffeearoma führen. Eine einheitliche Dosierung der nichterfindungsgemäßen Instant-Getränkezusammensetzungen unter Erzielung hervorragender organoleptischer Eigenschaften in den fertig zubereiteten Getränken ist somit unter Verwendung derartiger Zusammensetzungen nicht möglich. Bei den unter Aufschäumen hergestellten Instant-Getränkezusammensetzungen ist zudem die Dosierung durch das sehr geringe Schüttgewicht weitergehend erschwert, abgesehen von der geringen Stabilität der Teilchen dieser Instant-Getränkezusammensetzungen.

Die erfindungsgemäßen Instant-Getränkezusammensetzungen sind den Vergleichszusammensetzungen in Bezug auf die für den Verbraucher relevanten Eigenschaften im Ergebnis deutlich überlegen. Insgesamt zeichnen sich die auf Basis der erfindungsgemäßen Instant-Getränkezusammensetzungen hergestellten Getränke durch hervorragende organoleptische Eigenschaften, insbesondere ein vollmundiges Röstaroma, sowie gute Dosiereigenschaften aus, was im Stand der Technik bislang nicht gelungen ist.

## Patentansprüche

1. Verfahren zur Herstellung einer Instant-Getränkezusammensetzung, insbesondere für ein kaffeehaltiges Instant-Getränk und/oder ein Kaffee-Getränk, wobei das Verfahren die nachfolgenden Verfahrensschritte umfasst:
(a) Bereitstellen mindestens eines Kaffee-Extrakts, insbesondere in Form eines wässrigen Fluidextrakts;
(b) nachfolgendes Aufkonzentrieren des Kaffee-Extrakts zum Erhalt eines eingedickten Kaffee-Extrakts (Dickextrakt);
(c) anschließendes Abkühlen des in Verfahrensschritt (b) erhaltenen eingedickten Kaffee-Extrakts auf Temperaturen unterhalb von 0 °C derart, dass der abgekühlte eingedickte Kaffee-Extrakt jeweils eine gegenüber dem aus (b) erhaltenen Kaffee-Extrakt erhöhte Viskosität und/oder verringerte Fließfähigkeit aufweist; und
(d) nachfolgendes und/oder während Verfahrensschritt (c) durchgeführtes, insbesondere nachfolgendes Einarbeiten und/oder Inkorporieren von Röstkaffeepulver in den abgekühlten eingedickten Kaffee-Extrakt unter Einmischen und/oder Einrühren des Röstkaffees zum Erhalt einer homogenen und/oder gleich-mäßigen Verteilung des Röstkaffees in dem abgekühlten Kaffee-Extrakt oder in dem abgekühlten eingedickten Kaffee-Extrakt,
wobei in Verfahrensschritt (a) und/oder (b) der Kaffee-Extrakt auf einen Feststoffgehalt im Bereich von 20 bis 75 Gew.-%, bezogen auf den Kaffee-Extrakt, eingestellt wird und wobei in Verfahrensschritt (c) der abgekühlte Kaffee-Extrakt auf eine dynamische Viskosität im Bereich von 200 bis 10.000 mPa·s eingestellt wird, bezogen auf eine Temperatur im Bereich von -10 °C bis 10 °C.

2. Verfahren nach Anspruch 1,
wobei in Verfahrensschritt (a) der Kaffee-Extrakt durch Fest/Flüssig-Extraktion, insbesondere durch Perkolation, bereitgestellt wird, insbesondere wobei als Auszugs- und/oder Extraktionsmittel Wasser eingesetzt wird; und/oder
wobei in Verfahrensschritt (a) und/oder (b) der Kaffee-Extrakt auf einen Feststoffgehalt im Bereich von 25 bis 70 Gew.-%, noch mehr bevorzugt im Bereich von 30 bis 60 Gew.-%, bezogen auf den Kaffee-Extrakt, eingestellt wird; und/oder
wobei in Verfahrensschritt (c) der vorzugsweise eingedickte Kaffee-Extrakt, insbesondere wie in Verfahrensschritt (a) oder (b) erhalten, auf eine Temperatur im Bereich von -20 bis 0 °C, insbesondere im Bereich von -15 bis -2 °C, vorzugsweise im Bereich von -10 bis -4 °C, abgekühlt wird; und/oder
wobei das Abkühlen in Verfahrensschritt (c) unter Eintrag von Scherkräften, insbesondere unter Mischen und/oder Rühren, erfolgt; und/oder
wobei in Verfahrensschritt (c) die Viskosität des vorzugsweise eingedickten Kaffee-Extrakts, insbesondere wie in Verfahrensschritt (a) oder (b) erhalten, erhöht wird und/oder wobei in Verfahrensschritt (c) die Fließfähigkeit des vorzugsweise eingedickten Kaffee-Extrakts, insbesondere wie in Verfahrensschritt (a) oder (b) erhalten, herabgesetzt wird; und/oder
wobei in Verfahrensschritt (c) derart verfahren wird, dass der vorzugsweise eingedickte Kaffee-Extrakt, insbesondere wie in Verfahrensschritt (a) oder (b) erhalten, nicht erstarrt und/oder nicht vollständig gefriert und/oder fest wird.

3. Verfahren nach Anspruch 1 oder 2,
wobei das Abkühlen in Verfahrensschritt (c) unter Ausbildung von insbesondere partikulären Eiskristallen und/oder Eispartikeln in dem abgekühlten Kaffee-Extrakt erfolgt, insbesondere wobei die Eiskristalle und/oder Eispartikel in dem Kaffee-Extrakt dispergiert, insbesondere suspendiert, werden und/oder vorliegen, und/oder wobei das Abkühlen in Verfahrensschritt (c) unter Ausbildung einer Dispersion, insbesondere Suspension, von partikulären Eiskristallen und/oder Eispartikeln in dem abgekühlten Kaffee-Extrakt erfolgt;
insbesondere wobei die partikulären Eiskristalle und/oder Eispartikel eine Teilchengröße, insbesondere einen mittleren Teilchendurchmesser, vorzugsweise bestimmt als D50-Wert, im Bereich von 0,01 bis 5 mm, insbesondere im Bereich von 0,05 bis 2,5 mm, vorzugsweise im Bereich von 0,07 bis 2 mm, bevorzugt im Bereich von 0,1 bis 1 mm, aufweisen; und/oder
insbesondere wobei der Gehalt an partikulären Eiskristallen und/oder Eispartikeln in dem abgekühlten Kaffee-Extrakt im Bereich von 5 bis 99 Gew.-%, insbesondere im Bereich von 10 bis 98 Gew.-%, vorzugsweise im Bereich von 20 bis 97 Gew.-%, bevorzugt im Bereich von 30 bis 95 Gew.-%, besonders bevorzugt im Bereich von 50 bis 90 Gew.-%, bezogen auf den abgekühlten Kaffee-Extrakt, liegt; und/oder insbesondere wobei der Gehalt an partikulären Eiskristallen und/oder Eispartikeln in dem abgekühlten Kaffee-Extrakt mindestens 5 Gew.-%, insbesondere mindestens 10 Gew.-%, vorzugsweise mindestens 20 Gew.-%, bevorzugt mindestens 30 Gew.-%, besonders bevorzugt mindestens 50 Gew.-%, bezogen auf den abgekühlten Kaffee-Extrakt, beträgt; und/oder
insbesondere wobei der Gehalt an partikulären Eiskristallen und/oder Eispartikeln in dem abgekühlten Kaffee-Extrakt höchstens 99 Gew.-%, insbesondere höchstens 98 Gew.-%, vorzugsweise höchstens 97 Gew.-%, bevorzugt höchstens 95 Gew.-%, besonders bevorzugt höchstens 90 Gew.-%, bezogen auf den abgekühlten Kaffee-Extrakt, beträgt.

4. Verfahren nach einem der vorangehenden Ansprüche,
wobei in Verfahrensschritt (c) der abgekühlte Kaffee-Extrakt auf eine dynamische Viskosität im Bereich von 200 bis 8.000 mPa·s, vorzugsweise im Bereich von 500 bis 5.000 mPa·s, bevorzugt im Bereich von 750 bis 3.000 mPa·s, besonders bevorzugt im Bereich von 1.000 bis 2.500 mPa·s, eingestellt wird, insbesondere bezogen auf eine Temperatur im Bereich von -10 °C bis 10 °C, vorzugsweise bezogen auf eine Temperatur von -5 °C; und/oder
wobei in Verfahrensschritt (d) der insbesondere partikuläre Röstkaffee zumindest im Wesentlichen vollständig in der flüssigen Phase eingearbeitet und/oder inkorporiert wird und/oder vorliegt und/oder wobei in Verfahrensschritt (d) der insbesondere partikuläre Röstkaffee in der flüssigen Phase des vorzugsweise abgekühlten Kaffee-Extrakts homogen und/oder gleichmäßig verteilt wird und/oder vorliegt; und/oder
wobei in Verfahrensschritt (d) der insbesondere partikuläre Röstkaffee in einer Menge im Bereich von 1 bis 60 Gew.-%, insbesondere im Bereich von 2 bis 50 Gew.-%, vorzugsweise im Bereich von 4 bis 40 Gew.-%, bevorzugt im Bereich von 5 bis 30 Gew.-%, besonders bevorzugt im Bereich von 10 bis 20 Gew.-%, bezogen auf den abgekühlten Kaffee-Extrakt, in den abgekühlten Kaffee-Extrakt eingemischt und/oder inkorporiert wird und/oder wobei der in Verfahrensschritt (d) erhaltene abgekühlte Kaffee-Extrakt den insbesondere partikulären Röstkaffee in einer Menge im Bereich von 1 bis 60 Gew.-%, insbesondere im Bereich von 2 bis 50 Gew.-%, vorzugsweise im Bereich von 4 bis 40 Gew.-%, bevorzugt im Bereich von 5 bis 30 Gew.-%, besonders bevorzugt im Bereich von 10 bis 20 Gew.-%, bezogen auf den abgekühlten Kaffee-Extrakt, enthält.

5. Verfahren nach einem der vorangehenden Ansprüche, wobei der in Verfahrensschritt (d) eingesetzte insbesondere partikuläre Röstkaffee eine mittlere Teilchengröße, insbesondere bestimmt als D50-Wert, im Bereich von 1 bis 500 µm, insbesondere im Bereich von 5 bis 250 µm, vorzugsweise im Bereich von 10 bis 100 µm, bevorzugt im Bereich von 20 bis 80 µm, besonders bevorzugt im Bereich von 30 bis 60 µm, aufweist.

6. Verfahren nach einem der Ansprüche 1 bis 4,
wobei der in Verfahrensschritt (d) eingesetzte, insbesondere partikuläre Röstkaffee in Form von insbesondere partikulärem Röstkaffee mit größerem Teilchendurchmesser, vorzugsweise in Form von grob vermahlenem und/oder vorzugsweise einmalig gewalztem Röstkaffee, eingesetzt wird und/oder wobei der in Verfahrensschritt (d) eingesetzte, insbesondere partikuläre Röstkaffee in Form eines vermahlenen und/oder gewalzten, insbesondere vermahlenen und gewalzten, Röstkaffees eingesetzt wird, insbesondere wobei der insbesondere partikuläre Röstkaffee mit größerem Teilchendurchmesser in Verfahrensschritt (d) zerkleinert und/oder zermahlen wird und/oder vorzugsweise auf definierte Teilchengrößen eingestellt wird, insbesondere wie in Anspruch 5 definiert, insbesondere wobei die Zerkleinerung und/oder Zermahlung mittels Eintrag von Scherkräften erfolgt und/oder wobei Verfahrensschritt (d) in einer Dispergiervorrichtung durchgeführt wird; und/oder
wobei der insbesondere partikuläre Röstkaffee mit größerem Teilchendurchmesser, bezogen auf den Zustand vor der weiteren Zerkleinerung in Verfahrensschritt (d), eine mittlere Teilchengröße, insbesondere bestimmt als D50-Wert, im Bereich von 10 bis 2.500 µm, insbesondere im Bereich von 50 bis 1.500 µm, vorzugsweise im Bereich von 75 bis 1.000 µm, bevorzugt im Bereich von 90 bis 750 µm, besonders bevorzugt im Bereich von 100 bis 500 µm, aufweist und/oder wobei der insbesondere partikuläre Röstkaffee mit größerem Teilchendurchmesser und/oder der in Verfahrensschritt (d) resultierende partikuläre Röstkaffee, bezogen auf den Zustand nach Durchführung von Verfahrensschritt (d), eine mittlere Teilchengröße, insbesondere bestimmt als D50-Wert, im Bereich von 1 bis 500 µm, insbesondere im Bereich von 5 bis 250 µm, vorzugsweise im Bereich von 10 bis 100 µm, bevorzugt im Bereich von 20 bis 80 µm, besonders bevorzugt im Bereich von 30 bis 60 µm, aufweist.

7. Verfahren nach einem der vorangehenden Ansprüche,
wobei Verfahrensschritt (c) und/oder Verfahrensschritt (d) kontinuierlich, semikontinuierlich oder diskontinuierlich, insbesondere kontinuierlich oder semikontinuierlich, vorzugsweise kontinuierlich, durchgeführt werden; und/oder
wobei Verfahrensschritt (c) und/oder Verfahrensschritt (d) in einem kühlbaren, insbesondere für eine kontinuierliche, semikontinuierliche oder diskontinuierliche Verfahrensführung geeigneten, Mischreaktor durchgeführt wird, vorzugsweise in einem Schabekühler, in einer Dispergiervorrichtung oder in einem Tieftemperaturextruder.

8. Verfahren nach einem der vorangehenden Ansprüche,
wobei in einem weiteren, insbesondere sich Verfahrensschritt (d) anschließenden Verfahrensschritt (e) der in Verfahrensschritt (d) erhaltene, mit Röstkaffee ausgerüstete Kaffee-Extrakt zumindest im Wesentlichen vollständig verfestigt und/oder zumindest im Wesentlichen in einen festen Aggregatzustand überführt wird und/oder wobei der in Verfahrensschritt (d) erhaltene, mit Röstkaffee ausgerüstete Kaffee-Extrakt anschließend zumindest im Wesentlichen vollständig gefroren wird, insbesondere mittels Tiefgefrieren, vorzugsweise Schockfrosten und/oder Schockgefrieren;
insbesondere wobei die zumindest im Wesentlichen vollständige Verfestigung und/oder die zumindest im Wesentlichen vollständige Überführung in einen festen Aggregatzustand und/oder das zumindest im Wesentlichen vollständige Gefrieren des in Verfahrensschritt (d) erhaltenen und mit Röstkaffee ausgerüsteten Kaffee-Extrakts durch Abkühlen auf Temperaturen im Bereich von -100 bis -15 °C, insbesondere im Bereich von - 80 bis -20 °C, vorzugsweise im Bereich von -70 bis -30 °C, bevorzugt im Bereich von -60 bis -40 °C, erfolgt; und/oder
insbesondere wobei die zumindest im Wesentlichen vollständige Verfestigung und/oder die zumindest im Wesentlichen vollständige Überführung in einen festen Aggregatzustand und/oder das zumindest im Wesentlichen vollständige Gefrieren des in Verfahrensschritt (d) erhaltenen und mit Röstkaffee ausgerüsteten Kaffee-Extrakts ohne Eintrag von Scherkräften oder aber unter abnehmendem, insbesondere ausklingendem Eintrag von Scherkräften erfolgt.

9. Verfahren nach einem der vorangehenden Ansprüche, wobei in einem weiteren, insbesondere sich Verfahrensschritt (e) anschließenden Verfahrensschritt (f) der mit Röstkaffee ausgerüstete und verfestigte, insbesondere zumindest im Wesentlichen vollständig gefrorene Kaffee-Extrakt, insbesondere wie in Verfahrensschritt (e) erhalten, in einzelne Teilchen zerkleinert wird, vorzugsweise mittels Brechen, Granulieren und/oder Vermahlen, insbesondere wobei die Teilchen eine Teilchengröße, insbesondere eine mittlere Teilchengröße, vorzugsweise bestimmt als D50-Wert, im Bereich von 0,1 bis 10 mm, insbesondere im Bereich von 0,3 bis 8 mm, vorzugsweise im Bereich von 0,5 bis 5 mm, bevorzugt im Bereich von 1 bis 4 mm, aufweisen und/oder wobei die Teilchen eine zumindest im Wesentlichen kugelförmige, stäbchenförmige, würfelartige oder unregelmäßige Form aufweisen.

10. Verfahren nach einem der vorangehenden Ansprüche,
wobei in einem weiteren, insbesondere sich Verfahrensschritt (f) anschließenden Verfahrensschritt (g) die Teilchen des mit Röstkaffee ausgerüsteten und verfestigten, insbesondere zumindest im Wesentlichen vollständig gefrorenen Kaffee-Extrakts, insbesondere wie in Verfahrensschritt (f) erhalten, zum Erhalt der Instant-Getränkezusammensetzung getrocknet werden, insbesondere unter gegenüber Atmosphärendruck verringertem Druck und/oder Unterdruck, vorzugsweise mittels Gefriertrocknung oder Vakuumbandtrocknung;
insbesondere wobei die Teilchen der Instant-Getränkezusammensetzung auf eine Gesamtrestfeuchte im Bereich von 0,01 bis 5 Gew.-%, insbesondere im Bereich von 0,1 bis 4 Gew.-%, vorzugsweise im Bereich von 1 bis 3 Gew.-%, bezogen auf die Teilchen der Instant-Getränkezusammensetzung, eingestellt werden; und/oder
insbesondere wobei die Teilchen eine Teilchengröße, insbesondere eine mittlere Teilchengröße, vorzugsweise bestimmt als D50-Wert, im Bereich von 0,05 bis 9 mm, insbesondere im Bereich von 0,1 bis 7 mm, vorzugsweise im Bereich von 0,3 bis 4 mm, bevorzugt im Bereich von 0,5 bis 3 mm, aufweisen und/oder wobei die Teilchen eine zumindest im Wesentlichen kugelförmige, stäbchenförmige, würfelartige oder unregelmäßige Form aufweisen; und/oder
insbesondere wobei die Teilchen der Instant-Getränkezusammensetzung den insbesondere partikulären Röstkaffee homogen und/oder gleichmäßig verteilt aufweisen und/oder wobei der insbesondere partikuläre Röstkaffee homogen und/oder gleichmäßig verteilt in den Teilchen der Instant-Getränkezusammensetzung vorliegt.

11. Verfahren zur Herstellung einer Instant-Getränkezusammensetzung, insbesondere für ein kaffeehaltiges Instant-Getränk und/oder ein Kaffee-Getränk, nach einem der vorangehenden Ansprüche, wobei das Verfahren die nachfolgenden Verfahrensschritte umfasst:
(a) Bereitstellen mindestens eines Kaffee-Extrakts, insbesondere in Form eines wässrigen Fluidextrakts;
(b) nachfolgendes Aufkonzentrieren des Kaffee-Extrakts, insbesondere Fluidextrakts, vorzugsweise zum Erhalt eines eingedickten Kaffee-Extrakts (Dickextrakt), wobei in Verfahrensschritt (a) und/oder (b) der Kaffee-Extrakt auf einen Feststoffgehalt im Bereich von 20 bis 75 Gew.-%, bezogen auf den Kaffee-Extrakt, eingestellt wird;
(c) anschließendes Abkühlen des in Verfahrensschritt (b) erhaltenen eingedickten Kaffee-Extrakts auf Temperaturen unterhalb von 0 °C und/oder Abkühlen des in Verfahrensschritt (b) erhaltenen eingedickten Kaffee-Extrakts derart, dass der abgekühlte eingedickte Kaffee-Extrakt jeweils eine gegenüber dem aus Verfahrensschritt (b) erhaltenen Kaffee-Extrakt erhöhte Viskosität und/oder verringerte Fließfähigkeit aufweist, wobei in Verfahrensschritt (c) der abgekühlte Kaffee-Extrakt auf eine dynamische Viskosität im Bereich von 200 bis 10.000 mPa·s eingestellt wird, bezogen auf eine Temperatur im Bereich von -10 °C bis 10 °C;
(d) nachfolgendes und/oder während Verfahrensschritt (c) durchgeführtes, insbesondere nachfolgendes Einarbeiten und/oder Inkorporieren von insbesondere partikulärem Röstkaffee, insbesondere Röstkaffeepulver, in den abgekühlten eingedickten Kaffee-Extrakt, insbesondere unter Einmischen und/oder Einrühren des Röstkaffees, vorzugsweise zum Erhalt einer homogenen und/oder gleichmäßigen Verteilung des Röstkaffees in dem abgekühlten eingedickten Kaffee-Extrakt;
(e) nachfolgend zumindest im Wesentlichen vollständiges Verfestigen des in Verfahrensschritt (d) erhaltenen, mit Röstkaffee ausgerüsteten Kaffee-Extrakts und/oder Überführen des in Verfahrensschritt (d) erhaltenen, mit Röstkaffee ausgerüsteten Kaffee-Extrakts in einem zumindest im Wesentlichen festen Aggregatzustand, insbesondere mittels Tiefgefrieren, vorzugsweise Schockfrosten und/oder Schockgefrieren;
(f) nachfolgende Zerkleinerung des mit Röstkaffee ausgerüsteten verfestigten Kaffee-Extrakts, insbesondere wie in Verfahrensschritt (e) erhalten, in einzelne Teilchen, insbesondere mittels Brechen, Granulieren und/oder Vermahlen; und
(g) nachfolgende Trocknung der Teilchen des mit Röstkaffee ausgerüsteten, verfestigten, insbesondere zumindest im Wesentlichen vollständig gefrorenen Kaffee-Extrakts, insbesondere wie in Verfahrensschritt (f) erhalten, vorzugsweise mittels Gefriertrocknung oder Vakuumbandtrocknung, zum Erhalt der Instant-Getränkezusammensetzung.

12. Instant-Getränkezusammensetzung, insbesondere kaffeehaltige Instant-Getränkezusammensetzung, vorzugsweise zur Herstellung eines kaffeehaltigen Instant-Getränks oder zur Herstellung eines Kaffee-Getränks, erhältlich durch ein Verfahren gemäß einem der Ansprüche 1 bis 11.

13. Verwendung einer Instant-Getränkezusammensetzung nach Anspruch 12, insbesondere einer kaffeehaltigen Instant-Getränkezusammensetzung, zur Herstellung eines kaffeehaltigen Instant-Getränks oder zur Herstellung eines Kaffee-Getränks.

## Claims

1. A method for producing an instant drink mixture, in particular for an instant drink containing coffee and/or a coffee drink, wherein the method comprises the following method steps:
(a) providing at least one coffee extract, in particular in the form of an aqueous fluid extract;
(b) subsequent concentrating of the coffee extract to obtain a thickened coffee extract (thick extract);
(c) then cooling the thickened coffee extract obtained in method step (b) to temperatures below 0°C such that the cooled, thickened coffee extract has an increased viscosity and/or reduced flowability compared with the coffee extract obtained from (b); and
(d) including and/or incorporating roasted coffee powder into the cooled, thickened coffee extract subsequently and/or during method step (c), in particular subsequently, by means of mixing and/or stirring the roasted coffee to obtain a homogeneous and/or uniform distribution of the roasted coffee in the cooled coffee extract or in the cooled, thickened coffee extract,
wherein in method step (a) and/or (b) the coffee extract is adjusted to a solids content in the range of 20 to 75 wt%, relative to the coffee extract, and
wherein in method step (c) the cooled coffee extract is adjusted to a dynamic viscosity in the range of 200 to 10,000 mPa·s in relation to a temperature in the range of -10°C to 10°C.

2. The method according to claim 1
wherein in method step (a) the coffee extract is provided by solid/liquid extraction, in particular by percolation, in particular wherein water is used as the extracting agent; and/or
wherein in method step (a) and/or (b) the coffee extract is adjusted to a solids content in the range of 25 to 70 wt%, more preferably in the range of 30 to 60 wt%, relative to the coffee extract; and/or
wherein in method step (c) the preferably thickened coffee extract, in particular as obtained in method step (a) or (b), is cooled to a temperature in the range of -20 to 0°C, in particular in the range of -15 to -2°C, preferably in the range of -10 to -4°C; and/or wherein the cooling in method step (c) takes place by applying shear forces, in particular by mixing and/or stirring; and/or
wherein in method step (c) the viscosity of the preferably thickened coffee extract, in particular as obtained in method step (a) or (b), is increased, and/or wherein in method step (c) the flowability of the preferably thickened coffee extract, in particular as obtained in method step (a) or (b), is reduced; and/or
wherein in method step (c) the method is such that the preferably thickened coffee extract, in particular as obtained in method step (a) or (b), does not solidify and/or does not completely freeze and/or harden.

3. The method according to claim 1 or 2,
wherein the cooling in method step (c) takes place in particular so as to form particulate ice crystals and/or ice particles in the cooled coffee extract, in particular wherein the ice crystals and/or ice particles are dispersed, in particular suspended, and/or present in the coffee extract, and/or wherein the cooling in method step (c) takes place so as to form a dispersion, in particular a suspension, of particulate ice crystals and/or ice particles in the cooled coffee extract;
in particular wherein the particulate ice crystals and/or ice particles have a particle size, in particular an average particle diameter, preferably determined as a D50 value, in the range of 0.01 to 5 mm, in particular in the range of 0.05 to 2.5 mm, preferably in the range of 0.07 to 2 mm, more preferably in the range of 0.1 to 1 mm; and/or
in particular wherein the content of particulate ice crystals and/or ice particles in the cooled coffee extract is in the range of 5 to 99 wt%, in particular in the range of 10 to 98 wt%, preferably in the range of 20 to 97 wt%, more preferably in the range of 30 to 95 wt%, particularly preferably in the range of 50 to 90 wt%, relative to the cooled coffee extract; and/or
in particular wherein the content of particulate ice crystals and/or ice particles in the cooled coffee extract is at least 5 wt%, in particular at least 10 wt%, preferably at least 20 wt%, preferably at least 30 wt%, particularly preferably at least 50 wt%, relative to the cooled coffee extract; and/or
in particular wherein the content of particulate ice crystals and/or ice particles in the cooled coffee extract is at most 99 wt%, in particular at most 98 wt%, preferably at most 97 wt%, preferably at most 95 wt%, particularly preferably at most 90 wt%, relative to the cooled coffee extract.

4. The method according to any one of the preceding claims,
wherein in method step (c) the cooled coffee extract is adjusted to a dynamic viscosity in the range of 200 to 8000 mPa·s, preferably in the range of 500 to 5000 mPa·s, more preferably in the range of 750 to 3000 mPa·s, particularly preferably in the range of 1000 to 2500 mPa·s, in particular in relation to a temperature in the range of -10°C to 10°C, preferably in relation to a temperature of -5°C; and/or
wherein in method step (d) the in particular particulate roasted coffee is at least substantially completely introduced and/or incorporated into the liquid phase and/or wherein in method step (d) the in particular particulate roasted coffee in the liquid phase of the preferably cooled coffee extract is homogeneous and/or uniformly distributed and/or present; and/or
wherein in method step (d) the in particular particulate roasted coffee is mixed and/or incorporated into the cooled coffee extract in an amount in the range of 1 to 60 wt%, in particular in the range of 2 to 50 wt%, preferably in the range of 4 to 40 wt%, more preferably in the range of 5 to 30 wt%, particularly preferably in the range of 10 to 20 wt%, relative to the cooled coffee extract, and/or wherein the cooled coffee extract obtained in method step (d) contains the in particular particulate roasted coffee in an amount in the range of 1 to 60 wt%, in particular in the range of 2 to 50 wt%, preferably in the range of 4 to 40 wt%, preferably in the range of 5 to 30 wt%, particularly preferably in the range of 10 to 20 wt%, relative to the cooled coffee extract.

5. The method according to any one of the preceding claims, wherein the in particular particulate roasted coffee used in method step (d) has an average particle size, in particular determined as a D50 value, in the range of 1 to 500 µm, in particular in the range of 5 to 250 µm, preferably in the range of 10 to 100 µm, more preferably in the range of 20 to 80 µm, particularly preferably in the range of 30 to 60 µm.

6. The method according to any one of claims 1 to 4,
wherein the in particular particulate roasted coffee used in method step (d) is used in the form of in particular particulate roasted coffee having a larger particle diameter, preferably in the form of coarsely ground and/or preferably single-rolled roasted coffee and/or wherein the in particular particulate roasted coffee used in method step (d) is used in the form of a ground and/or rolled, in particular ground and rolled, roasted coffee, in particular wherein the in particular particulate roasted coffee having a larger particle diameter in method step (d) is crushed and/or ground and/or preferably adjusted to defined particle sizes, in particular as defined in claim 5, in particular wherein the crushing and/or grinding is carried out by applying shear forces and/or wherein method step (d) is carried out in a dispersing device; and/or
wherein the in particular particulate roasted coffee having a larger particle diameter, relative to the state before further crushing in method step (d), has an average particle size, in particular determined as a D50 value, in the range of 10 to 2500 µm, in particular in the range of 50 to 1500 µm, preferably in the range of 75 to 1000 µm, more preferably in the range of 90 to 750 µm, particularly preferably in the range of 100 to 500 µm, and/or wherein the in particular particulate roasted coffee having a larger particle diameter and/or the particulate roasted coffee resulting in method step (d), relative to the state after carrying out method step (d), has an average particle size, in particular determined as a D50 value, in the range of 1 to 500 µm, in particular in the range of 5 to 250 µm, preferably in the range of 10 to 100 µm, more preferably in the range of 20 to 80 µm, particularly preferably in the range of 30 to 60 µm.

7. The method according to any one of the preceding claims,
wherein method step (c) and/or method step (d) are carried out continuously, semi-continuously or discontinuously, in particular continuously or semi-continuously, preferably continuously; and/or
wherein method step (c) and/or method step (d) is carried out in a coolable mixing reactor, in particular suitable for a continuously, semi-continuously or discontinuously carrying out the method, preferably in a scraped-surface cooler, in a dispersing device or in a low-temperature extruder.

8. The method according to any one of the preceding claims,
wherein in a further method step (e), in particular subsequent to method step (d), the coffee extract provided with roasted coffee obtained in method step (d) is at least substantially completely solidified and/or at least substantially converted to a solid state and/or wherein the coffee extract provided with roasted coffee obtained in method step (d) is then at least substantially completely frozen, in particular by means of deep-freezing, preferably blast-freezing and/or flash-freezing;
in particular wherein the at least substantially complete solidification and/or the at least substantially complete conversion into a solid state and/or the at least substantially complete freezing of the coffee extract provided with roasted coffee and obtained in method step (d) is achieved by cooling to temperatures in the range of -100 to -15°C, in particular in the range of -80 to -20°C, preferably in the range of -70 to -30°C, more preferably in the range of -60 to -40°C; and/or
in particular wherein the at least substantially complete solidification and/or the at least substantially complete conversion into a solid state and/or the at least substantially complete freezing of the coffee extract provided with roasted coffee and obtained in method step (d) is carried out without applying shear forces or by else applying shear forces in a decreasing, in particular diminishing, manner.

9. The method according to any one of the preceding claims, wherein in a further method step (f), in particular subsequent to method step (e), the coffee extract provided with roasted coffee and solidified, in particular at least substantially completely frozen, in particular as obtained in method step (e), in crushed into individual particles, preferably by means of breaking, granulating and/or grinding, in particular wherein the particles have a particle size, in particular an average particle size, preferably determined as a D50 value, in the range of 0.1 to 10 mm, in particular in the range of 0.3 to 8 mm, preferably in the range of 0.5 to 5 mm, more preferably in the range of 1 to 4 mm, and/or wherein the particles have an at least substantially spherical, rod-shaped, cube-shaped or irregular shape.

10. The method according to any one of the preceding claims,
wherein in a further method step (g), in particular subsequent to method step (f), the particles of the coffee extract provided with roasted coffee and solidified, in particular at least substantially completely frozen, in particular as obtained in method step (f), are dried to obtain the instant drink mixture, in particular under reduced pressure and/or negative pressure relative to atmospheric pressure, preferably by freeze-drying or vacuum belt drying;
in particular wherein the particles of the instant drink mixture are adjusted to a total residual moisture in the range of 0.01 to 5 wt%, in particular in the range of 0.1 to 4 wt%, preferably in the range of 1 to 3 wt%, relative to the particles of the instant drink mixture; and/or
in particular wherein the particles have a particle size, in particular an average particle size, preferably determined as a D50 value, in the range of 0.05 to 9 mm, in particular in the range of 0.1 to 7 mm, preferably in the range of 0.3 to 4 mm, more preferably in the range of 0.5 to 3 mm, and/or wherein the particles have an at least substantially spherical, rod-shaped, cube-shaped or irregular shape; and/or
in particular wherein the particles of the instant drink mixture comprise the in particular particulate roasted coffee homogeneously and/or uniformly distributed and/or wherein the in particular particulate roasted coffee is present homogeneously and/or uniformly distributed in the particles of the instant drink mixture.

11. The method for producing an instant drink mixture, in particular for an instant drink containing coffee and/or a coffee drink, according to any one of the preceding claims, wherein the method comprises the following method steps:
(a) providing at least one coffee extract, in particular in the form of an aqueous fluid extract;
(b) subsequently concentrating the coffee extract, in particular a fluid extract, preferably to obtain a thickened coffee extract (thick extract), wherein in method step (a) and/or (b) the coffee extract is adjusted to a solids content in the range of 20 to 75 wt%, relative to the coffee extract;
(c) then cooling the thickened coffee extract obtained in method step (b) to temperatures below 0°C and/or cooling the thickened coffee extract obtained in method step (b) such that the cooled, thickened coffee extract has increased viscosity and/or reduced flowability compared to the coffee extract obtained from method step (b), wherein in method step (c) the cooled coffee extract is adjusted to a dynamic viscosity in the range of 200 to 10,000 mPa·s, in relation to a temperature in the range of -10°C to 10°C;
(d) including and/or incorporating in particular particulate roasted coffee, in particular roasted coffee powder, into the cooled, thickened coffee extract subsequently and/or during method step (c), in particular subsequently, in particular by mixing and/or stirring the roasted coffee, preferably to obtain a homogeneous and/or uniform distribution of the roasted coffee in the cooled, thickened coffee extract;
(e) subsequently at least substantially completely solidifying the coffee extract provided with roasted coffee obtained in method step (d) and/or converting the coffee extract provided with roasted coffee obtained in method step (d) into an at least substantially solid state, in particular by means of deep-freezing, preferably blast-freezing and/or flash-freezing;
(f) subsequently crushing the solidified coffee extract provided with roasted coffee, in particular as obtained in method step (e), into individual particles, in particular by means of breaking, granulating and/or grinding; and
(g) subsequently drying the particles of the solidified, in particular at least substantially completely frozen, coffee extract provided with roasted coffee, in particular as obtained in method step (f), preferably by freeze-drying or vacuum belt drying, to obtain the instant drink mixture.

12. An instant drink mixture, in particular an instant drink mixture containing coffee, preferably for the production of an instant drink containing coffee or for the production of a coffee drink, obtainable by means of a method according to any one of claims 1 to 11.

13. Use of an instant drink mixture according to claim 12, in particular an instant drink mixture containing coffee, for the production of an instant drink containing coffee or for the production of a coffee drink.

## Revendications

1. Procédé de production d'une composition de boisson instantanée, en particulier d'une boisson instantanée contenant du café et/ou d'une boisson au café, le procédé comprenant les étapes de procédé suivantes :
(a) fournir au moins un extrait de café, en particulier sous la forme d'un extrait fluide aqueux ;
(b) concentrer ensuite l'extrait de café pour obtenir un extrait de café épaissi (extrait épais) ;
(c) puis refroidir l'extrait de café épaissi obtenu dans l'étape de procédé (b) à des températures inférieures à 0 °C, de telle sorte que l'extrait de café épaissi refroidi présente respectivement une viscosité accrue et/ou une fluidité réduite par rapport à l'extrait de café obtenu en (b) ; et
(d) après et/ou pendant l'étape de procédé (c), intégrer et/ou incorporer, en particulier après, de la poudre de café torréfié dans l'extrait de café épaissi refroidi en mélangeant et/ou en délayant le café torréfié afin d'obtenir une répartition homogène et/ou uniforme du café torréfié dans l'extrait de café refroidi ou dans l'extrait de café épaissi refroidi,
dans lequel, dans l'étape de procédé (a) et/ou (b), l'extrait de café est ajusté à une teneur en matière sèche comprise dans la plage de 20 à 75 % en poids, par rapport à l'extrait de café et
dans lequel, dans l'étape de procédé (c), l'extrait de café refroidi est ajusté à une viscosité dynamique dans la plage de 200 à 10 000 mPa.s, pour une température dans la plage de -10 °C à 10 °C.

2. Procédé selon la revendication 1,
dans lequel, dans l'étape de procédé (a), l'extrait de café est obtenu par extraction solide/liquide, en particulier par percolation, en particulier dans lequel de l'eau est utilisée comme agent pour extraire et/ou d'extraction ; et/ou
dans lequel, dans l'étape de procédé (a) et/ou (b), l'extrait de café est ajusté à une teneur en matière sèche comprise dans la plage de 25 à 70 % en poids, de manière davantage préférée dans la plage de 30 à 60 % en poids, par rapport à l'extrait de café ; et/ou
dans lequel, dans l'étape de traitement (c), l'extrait de café de préférence épaissi, en particulier tel qu'obtenu dans l'étape de procédé (a) ou (b), est refroidi à une température dans la plage de -20 à 0 °C, en particulier dans la plage de -15 à -2 °C, de préférence dans la plage de -10 à -4 °C ; et/ou
dans lequel le refroidissement dans l'étape de procédé (c) se produit sous l'action de forces de cisaillement, en particulier lors du mélange et/ou de l'agitation ; et/ou
dans lequel, dans l'étape de procédé (c), la viscosité de l'extrait de café de préférence épaissi, en particulier tel qu'obtenu dans l'étape de procédé (a) ou (b) est augmentée et/ou dans lequel dans l'étape de procédé (c), la fluidité de l'extrait de café de préférence épaissi, en particulier tel qu'obtenu dans l'étape de procédé (a) ou (b), est réduite ; et/ou
dans lequel, dans l'étape de procédé (c), il est procédé de sorte que l'extrait de café de préférence épaissi, en particulier tel qu'obtenu dans l'étape de procédé (a) ou (b), ne se fige pas et/ou ne devienne pas totalement gelé et/ou solide.

3. Procédé selon la revendication 1 ou 2,
dans lequel le refroidissement dans l'étape de procédé (c) s'effectue par formation de cristaux de glace notamment particulaires et/ou de particules de glace dans l'extrait de café refroidi, en particulier dans lequel les cristaux de glace et/ou les particules de glace sont présents et/ou dispersés, en particulier mis en suspension, dans l'extrait de café et/ou dans lequel le refroidissement dans l'étape de procédé (c) s'effectue par formation d'une dispersion, en particulier d'une suspension, de cristaux de glace particulaires et/ou de particules de glaces dans l'extrait de café refroidi ;
en particulier dans lequel les cristaux de glace particulaires et/ou les particules de glace ont une taille de particule, en particulier un diamètre moyen de particule, de préférence déterminé en tant que valeur D50, dans la plage de 0,01 à 5 mm, en particulier dans la plage de 0,05 à 2,5 mm, de préférence dans la plage de 0,07 à 2 mm, de manière préférée dans la plage de 0,1 à 1 mm ; et/ou
en particulier dans lequel la teneur en cristaux de glace particulaires et/ou en particules de glace de l'extrait de café refroidi est située dans la plage de 5 à 99 % en poids, en particulier dans la plage de 10 à 98 % en poids, de préférence dans la plage de 20 à 97 % en poids, de manière davantage préférée dans la plage de 30 à 95 % en poids, de manière particulièrement préférée dans la plage de 50 à 90 % en poids par rapport à l'extrait de café refroidi ; et/ou
en particulier dans lequel la teneur en cristaux de glace particulaires et/ou en particules de glace dans l'extrait de café refroidi est d'au moins 5 % en poids, en particulier d'au moins 10 % en poids, de préférence d'au moins 20 % en poids, de manière préférée d'au moins 30 % en poids, de manière particulièrement préférée d'au moins 50 % en poids, par rapport à l'extrait de café refroidi ; et/ou
en particulier dans lequel la teneur en cristaux de glace particulaires et/ou en particules de glace dans l'extrait de café refroidi est d'au plus 99 % en poids, en particulier au plus 98 % en poids, de préférence au plus 97 % en poids, de manière préférée au plus 95 % en poids, de manière particulièrement préférée au plus 90 % en poids, par rapport à l'extrait de café refroidi.

4. Procédé selon l'une des revendications précédentes,
dans lequel, dans l'étape de procédé (c), l'extrait de café refroidi est ajusté à une viscosité dynamique dans la plage de 200 à 8 000 mPa.s, de préférence dans la plage de 500 à 5 000 mPa.s, de manière préférée dans la plage de 750 à 3 000 mPa.s, de manière particulièrement préférée dans plage de 1 000 à 2 500 mPa.s, en particulier pour une température dans la plage de -10 °C à 10 °C, de préférence une température de -5 °C ; et/ou
dans lequel, dans l'étape de procédé (d), le café torréfié en particulier particulaire est présent et/ou au moins sensiblement complètement intégré et/ou incorporé dans la phase liquide et/ou dans l'étape de procédé (d) le café torréfié en particulier particulaire est présent et/ou réparti de manière homogène et/ou uniforme dans la phase liquide de l'extrait de café de préférence refroidi ; et/ou
dans lequel, dans l'étape de procédé (d), le café torréfié en particulier particulaire est mélangé et /ou incorporé en une quantité comprise dans la plage de 1 à 60 % en poids, en particulier dans la plage de 2 à 50 % en poids, de préférence dans la plage de 4 à 40 % en poids, de manière préférée dans la plage de 5 à 30 % en poids, de manière particulièrement préférée dans la plage de 10 à 20 % en poids, par rapport à l'extrait de café refroidi, dans l'extrait de café refroidi et/ou dans lequel l'extrait de café refroidi obtenu à l'étape de procédé (d) contient le café torréfié en particulier particulaire en une quantité comprise entre 1 et 60 % en poids, en particulier entre 2 et 50 % en poids, de préférence entre 4 et 40 % en poids, de manière préférée entre 5 et 30 % en poids, de manière particulièrement préférée entre 10 et 20 % en poids, par rapport à l'extrait de café refroidi.

5. Procédé selon l'une des revendications précédentes, dans lequel le café torréfié en particulier particulaire utilisé à l'étape de procédé (d) a une taille moyenne de particule, en particulier déterminée en tant que valeur D50, dans la plage de 1 à 500 µm, en particulier dans la plage de 5 à 250 µm, de préférence dans la plage de 10 à 100 µm, de manière préférée dans la plage de 20 à 80 µm, plus préférablement dans la plage de 30 à 60 µm.

6. Procédé selon l'une des revendications 1 à 4,
dans lequel le café torréfié en particulier particulaire utilisé dans l'étape de procédé (d) est utilisé sous la forme de café torréfié en particulier particulaire ayant un plus grand diamètre de particules, de préférence sous la forme de café torréfié grossièrement moulu et/ou de préférence laminé une fois et/ou dans lequel le café torréfié en particulier particulaire utilisé dans l'étape de procédé (d) est utilisé sous la forme d'un café torréfié moulu et/ou laminé, en particulier moulu et laminé, en particulier dans lequel le café torréfié en particulier particulaire est broyé et/ou moulu avec un plus grand diamètre de particules dans l'étape de procédé (d) et/ou de préférence ajusté à des tailles de particules définies, en particulier comme défini dans la revendication 5, en particulier dans lequel le broyage et/ou la mouture sont effectués par introduction de forces de cisaillement et/ou dans lequel l'étape de procédé (d) est réalisée dans un dispositif de dispersion ; et/ou
dans lequel le café torréfié en particulier particulaire ayant un plus grand diamètre de particules, par rapport à l'état précédant le broyage ultérieur dans l'étape de procédé (d), a une taille de particule moyenne, en particulier déterminée en tant que valeur D50, dans la plage de 10 à 2 500 µm, en particulier dans la plage de 50 à 1500 µm, de préférence dans la plage de 75 à 1000 µm, de manière préférée dans la plage de 90 à 750 µm, de manière particulièrement préférée dans la plage de 100 à 500 µm et/ou dans lequel le café torréfié en particulier particulaire ayant un plus grand diamètre de particules et/ou le café torréfié particulaire résultant de l'étape de procédé (d), par rapport à l'état après réalisation de l'étape de procédé (d), a une taille de particule moyenne, en particulier déterminée en tant que valeur D50, dans la plage de 1 à 500 µm, en particulier dans la plage de 5 à 250 µm, de préférence dans la plage de 10 à 100 µm, de manière préférée dans la plage de 20 à 80 µm, plus préférablement dans la plage de 30 à 60 µm.

7. Procédé selon l'une des revendications précédentes,
dans lequel l'étape de procédé (c) et/ou l'étape de procédé (d) sont réalisées de manière continue, semi-continue ou discontinue, en particulier de manière continue ou semi-continue, de préférence continue ; et/ou
dans lequel l'étape de procédé (c) et/ou l'étape de procédé (d) sont réalisées dans un réacteur de mélange approprié pour la réalisation d'un procédé continu, semi-continu ou discontinu, pouvant être refroidi, de préférence dans un refroidisseur à surface raclée, dans un dispositif de dispersion ou dans une extrudeuse à basse température.

8. Procédé selon l'une des revendications précédentes,
dans lequel, dans une autre étape de procédé (e), en particulier suivant l'étape de procédé (d), l'extrait de café contenant le café torréfié obtenu à l'étape de procédé (d) est au moins sensiblement totalement solidifié et/ou converti au moins essentiellement dans un état agrégé solide et/ou dans lequel l'extrait de café contenant le café torréfié obtenu à l'étape de procédé (d) est ensuite au moins essentiellement totalement congelé, en particulier au moyen de congélation, de préférence par surgélation et/ou congélation rapide ;
en particulier dans lequel la solidification au moins essentiellement totale et/ou la conversion au moins essentiellement totale en un état agrégé solide et/ou la congélation au moins essentiellement totale de l'extrait de café contenant le café torréfié obtenu à l'étape de procédé (d) s'effectuent par refroidissement à des températures comprises dans la plage de -100 à -15 °C, en particulier dans la plage de -80 à -20 °C, de préférence dans la plage de -70 à -30 °C, de manière préférée dans la plage de -60 à -40 °C ; et/ou
en particulier dans lequel la solidification au moins essentiellement totale et/ou la conversion au moins essentiellement totale en un état agrégé solide et/ou la congélation au moins essentiellement totale de l'extrait de café contenant la café torréfié obtenu à l'étape (d) sont effectuées sans addition de forces de cisaillement ou se produisent lors de la diminution, en particulier de la fin, des forces de cisaillement.

9. Procédé selon l'une des revendications précédentes, dans lequel, dans une autre étape de procédé (f), en particulier suivant l'étape de procédé (e), l'extrait de café contenant le café torréfié et solidifié, en particulier au moins essentiellement totalement congelé, en particulier tel qu'obtenu à l'étape de procédé (e), est broyé en particules individuelles, de préférence par concassage, granulation et/ou mouture, en particulier dans lequel les particules ont une taille de particule, en particulier une taille moyenne de particule, déterminée de préférence comme valeur D50, dans la plage de 0,1 à 10 mm, en particulier dans la plage de 0,3 à 8 mm, de préférence dans la gamme de 0,5 à 5 mm, de manière préférée dans la gamme de 1 à 4 mm et/ou dans lequel les particules ont une forme au moins essentiellement sphérique, en forme de bâtonnet, en forme de cube ou irrégulière.

10. Procédé selon l'une des revendications précédentes,
dans lequel, dans une autre étape de procédé (g), en particulier suivant l'étape de procédé (f), les particules de l'extrait de café contenant le café torréfié et solidifié, au moins essentiellement totalement congelé, en particulier tel qu'obtenu à l'étape de procédé (f), sont séchées pour obtenir la composition de boisson instantanée, en particulier sous pression réduite par rapport à la pression atmosphérique et/ou négative, de préférence par lyophilisation ou séchage sur bande sous vide ;
en particulier dans lequel les particules de la composition de boisson instantanée sont ajustées à une humidité résiduelle totale comprise entre 0,01 et 5 % en poids, en particulier comprise entre 0,1 et 4 % en poids, de préférence entre 1 et 3 % en poids, par rapport aux particules de la composition de boisson instantanée ; et/ou
en particulier dans lequel les particules ont une taille de particule, en particulier une taille de particule moyenne, déterminée de préférence comme valeur D50, dans la plage de 0,05 à 9 mm, en particulier dans la plage de 0,1 à 7 mm, de préférence dans la plage de 0,3 à 4 mm, de manière préférée dans la plage de 0,5 à 3 mm et/ou dans lequel les particules ont une forme au moins essentiellement sphérique, en forme de bâtonnet, en forme de cube ou irrégulière ; et/ou
en particulier dans lequel les particules de la composition de boisson instantanée comprennent le café torréfié en particulier particulaire réparti de manière homogène et/ou uniforme et/ou dans lequel le café torréfié en particulier particulaire est présent réparti de manière homogène et/ou uniforme dans les particules de la composition de boisson instantanée.

11. Procédé de préparation d'une composition de boisson instantanée, en particulier d'une boisson instantanée contenant du café et/ou d'une boisson au café, selon l'une des revendications précédentes, le procédé comprenant les étapes de procédé suivantes :
(a) fournir au moins un extrait de café, en particulier sous la forme d'un extrait fluide aqueux ;
(b) concentrer ensuite l'extrait de café, en particulier l'extrait fluide, de préférence pour obtenir un extrait de café épaissi (extrait épais), dans lequel, dans l'étape de procédé (a) et/ou (b), l'extrait de café a une teneur en matière sèche comprise entre 20 et 75 % en poids, par rapport à l'extrait de café ;
(c) puis refroidir l'extrait de café épaissi obtenu à l'étape de procédé (b) à des températures inférieures à 0 °C et/ou refroidir l'extrait de café épaissi obtenu à l'étape de procédé (b) de telle sorte que l'extrait de café épaissi refroidi présente respectivement une viscosité augmentée et/ou une fluidité réduite par rapport à l'extrait de café obtenu dans l'étape de procédé (b), dans lequel, dans l'étape de procédé (c), l'extrait de café refroidi est ajusté à une viscosité dynamique dans la plage de 200 à 10 000 mPa.s, pour une température dans la plage de -10 °C à 10 °C ;
(d) après et/ou pendant l'étape de procédé (c), intégrer et/ou incorporer, en particulier après, du café torréfié en particulier particulaire, en particulier de poudre de café torréfié dans l'extrait de café épaissi refroidi, en particulier en mélangeant et/ou en délayant le café torréfié afin d'obtenir de préférence une répartition homogène et/ou uniforme du café torréfié dans l'extrait de café épaissi refroidi ;
(e) ensuite, solidifier au moins essentiellement totalement l'extrait de café contenant le café torréfié obtenu à l'étape de procédé (d) et/ou convertir l'extrait de café contenant le café torréfié obtenu à l'étape de procédé (d) en un état agrégé au moins essentiellement solide, en particulier par congélation, de préférence par surgélation et/ou congélation rapide ;
(f) fragmenter ultérieurement l'extrait de café solidifié contenant le café torréfié, en particulier tel qu'obtenu à l'étape de procédé (e), en particules individuelles, notamment par concassage, granulation et/ou broyage ; et
(g) Sécher ultérieurement les particules de l'extrait de café contenant le café torréfié solidifié, en particulier au moins essentiellement totalement congelé, en particulier tel qu'obtenu à l'étape de procédé (f), de préférence par lyophilisation ou séchage sur bande sous vide, pour obtenir la composition de boisson instantanée.

12. Composition de boisson instantanée, en particulier composition de boisson instantanée contenant du café, de préférence pour la préparation d'une boisson instantanée contenant du café ou pour la préparation d'une boisson au café, pouvant être obtenue par un procédé selon l'une des revendications 1 à 11.

13. Utilisation d'une composition de boisson instantanée selon la revendication 12, en particulier d'une composition de boisson instantanée contenant du café, pour la préparation d'une boisson instantanée contenant du café ou pour la préparation d'une boisson au café.
